# EUROPÄISCHE PATENTSCHRIFT

(11) **EP 3 761 557 B1**
(45) Veröffentlichungstag und Bekanntmachung des Hinweises auf die Patenterteilung: **27.04.2022**
(21) Anmeldenummer: 20183969.3
(22) Anmeldetag: 03.07.2020
(51) Int. Cl.: H04L 9/08

(54) **VERTEILUNG UND NUTZUNG QUANTENSICHERER SCHLÜSSEL IN EINEM NETZWERK**
DISTRIBUTION AND UTILISATION OF QUANTUM SECURE KEYS IN A NETWORK
DISTRIBUTION ET UTILISATION DES CLÉS QUANTIQUES SÛRES DANS UN RÉSEAU

(30) Priorität: 05.07.2019 DE 102019118286
(43) Veröffentlichungstag der Anmeldung: 06.01.2021
(73) Patentinhaber: Deutsche Telekom AG, 53113 Bonn (DE)
(72) Erfinder: BRAUN, Ralf-Peter, 12305 Berlin (DE)
(74) Vertreter: Brandt & Nern Patentanwälte

(56) Entgegenhaltungen:
- US-A1- 2004 184 603
- US-A1- 2006 062 392
- US-A1- 2010 329 459

## Beschreibung

Die Erfindung betrifft eine technische Lösung zur Nutzung quantensicherer Schlüssel für die Datenübertragung in einem Netzwerk (Kommunikationsnetz). Sie bezieht sich hierbei auf ein entsprechendes, insbesondere auch die Verteilung quantensicherer Schlüssel in einem Netzwerk einschließendes Verfahren und auf ein Netzwerk, welches aufgrund der Verwendung des erfindungsgemäßen Verfahrens durch Merkmale definiert wird, die seine Realisierung mit einem gegenüber dem Stand der Technik deutlich verringerten Aufwand ermöglichen.

Der Sicherheit der über ein Kommunikationsnetz zwischen Teilnehmern übertragenen Daten kommt eine sehr große und im Hinblick auf dafür zu erfüllende Anforderungen noch stark wachsende Bedeutung zu. Dies gilt unabhängig von ihrer Art im Grunde für alle über ein solches Kommunikationsnetz übertragenen Daten. Die Sicherheit von Daten mit Managementinformationen für den Betrieb eines entsprechenden Netzwerks ist dabei im Hinblick auf die Stabilität des Netzwerks und die Absicherung der zugrundeliegenden Infrastruktur gegen eventuelle Angriffe von großer Bedeutung. Andererseits haben aber auch die Nutzer des Netzwerks (Teilnehmer des Datenverkehrs) ein gesteigertes Bedürfnis daran, dass die zwischen ihnen ausgetauschten, gegebenenfalls sehr sensiblen Daten (Nutzdaten) vertraulich bleiben und gegenüber Manipulationen gesichert werden.

Seit längerem ist es daher gebräuchlich, einen sehr großen Teil der über ein Netzwerk, wie insbesondere das zunehmend auch für die Telefonie genutzte Internet, übertragenen Daten zu verschlüsseln beziehungsweise die für ihre Übertragung jeweils in dem Netzwerk genutzten Übertragungskanäle kryptographisch zu sichern. Gegenwärtig werden für diesen Zweck vorrangig asymmetrische beziehungsweise nach dem Public-Key-Kryptosystem-Prinzip arbeitende Verschlüsselungsverfahren eingesetzt.

In diesem Zusammenhang ist anzumerken, dass entsprechende Verschlüsselungsverfahren ständig fortentwickelt werden mussten und müssen, um Angriffen, die teilweise mit beträchtlichem Hardwareaufwand, zum Beispiel mittels einer Vielzahl zu einem diesem Zweck dienenden funktionalen Netz zusammengeschlossener Computer, geführt werden, widerstehen zu können. Auch ist dabei zu berücksichtigen, dass derartige Angriffe sowohl unter den Gesichtspunkten sich in den Cyberspace verlagernder kriegerischer Auseinandersetzungen zwischen Staaten und der Cyberkriminalität als auch der Wirtschaftsspionage in steigender Anzahl sowie mit immer anspruchsvollerer Technik und mit höher entwickelten Methoden ausgeführt werden.

Daher wurden in der Vergangenheit nicht nur die Verschlüsselungsverfahren ständig fortentwickelt, sondern im Rahmen dieser Verschlüsselungsverfahren auch immer längere Schlüssel eingesetzt, um entsprechende Angriffe zu erschweren. Ein etwas höheres Maß an Sicherheit bieten insoweit symmetrische Verschlüsselungsverfahren, wie zum Beispiel AES (AES = Advanced Encryption Standard), wobei aber deren praktische Umsetzung, im Hinblick auf das Erfordernis des Vorliegens jeweils gleicher Schlüssel beim Sender und Empfänger von Daten, mit erheblichen Schwierigkeiten behaftet ist.

Jedoch geht die Fachwelt ohnehin davon aus, dass Verschlüsselungsverfahren herkömmlicher Prägung, das heißt unter Einsatz elektronisch basierter digitaler Technik, künftig keinen hinreichenden Schutz mehr bieten können. Dies gilt insbesondere im Hinblick auf die sich beschleunigende Entwicklung von Quantencomputern. Derartige, Effekte und Elemente der Quantenmechanik nutzende Computer werden dabei in Kürze dazu in der Lage sein, auf bekannten Verschlüsselungsverfahren beruhende Schlüssel weitgehend unabhängig von deren Länge in sehr kurzer Zeit zu brechen. Dem kann jedoch mit Hilfe quantenkryptographischer Verfahren, welche für die Schlüsselerzeugung ebenfalls quantenmechanische Prinzipien nutzen und quantensichere Schlüssel über quantengesicherte Verbindung unter Nutzung spezieller kryptographischer Protokolle verteilen, begegnet werden.

Ein Verfahren, welches in diesem Zusammenhang bekannt geworden ist, ist das QKD-Verfahren (QKD = Quantum Key Distribution). Hierbei liegen an beiden Enden einer entsprechend gesicherten Verbindung jeweils gleiche, unter Nutzung quantenmechanischer Effekte erzeugte Schlüssel vor. Dabei ist zum einen die Bereitstellung identischer Schlüssel aufgrund der Nutzung quantenmechanischer Prinzipien einfacher als bei der Nutzung herkömmlicher elektronischer Verfahren und zum anderen ist es nicht möglich, unbemerkt Angriffe auf den schlüsselerzeugenden Quantenübertragungskanal zu führen.

Durch die US 2004/0 184 603 A1 wird eine das Prinzip der Quantum Key Distribution nutzende Lösung zur Übertragung eines Schlüssels von einem ersten Endpunkt zu einem anderen Endpunkt eine Netzwerks beschrieben. Die Übertragung geschieht dabei über eine Mehrzahl von zwischen den beiden Endknoten entlang eines Übertragungspfades angeordneten Netzwerkknoten, welche gewissermaßen als Relais wirken und jeweils zu einem auf dem Pfad vorhergehenden als auch zu einem auf dem Pfad nachfolgenden Knoten eine QKD-Beziehung unterhalten, das heißt mit ihren jeweiligen Nachbarknoten jeweils einen QKD-Verbund ausbilden. Eine hiermit vergleichbare Lösung wird durch die WO 2009/0 093 034 A2 beschrieben. Beiden Lösungen ist gemeinsam, dass sie von einem Netzwerk ausgehen, in welchem alle Netzwerkknoten über eine QKD-Infrastruktur verfügen.

Nachteilig ist es jedoch, dass die technische Realisierung einer QKD-Verbindung sehr aufwendig und teuer ist. Bedenkt man nun, dass es in einem vollvermaschten Netz mit N Knoten N x (N-1)/2 bidirektionale Verbindungen beziehungsweise N x (n-1) unidirektionale Verbindungen gibt, so entsteht hierbei unter Kostengesichtspunkten ein im Grunde nicht praktikabler Aufwand. Erschwerend kommt zudem hinzu, dass QKD-Verbindungen nur über vergleichsweise kurze Entfernungen von bis zu zirka 100 km aufgebaut werden können. Dies ist dadurch begründet, dass bei optischen Systemen, welche grundsätzlich eine Nutzung quantenmechanischer Effekte ermöglichen, zur Überbrückung größerer Entfernungen die Anordnung eines oder mehrerer optischer Verstärker (Optical Line Amplifier = OLA) in dem Übertragungsweg erforderlich wird, andererseits aber ein entsprechender Verstärker zu einer Verfälschung beziehungsweise zu einer Zerstörung quantenmechanischer Zustände der im Quantenkanal übertragenen Photonen führt, wodurch eine QKD-Schlüsselerzeugung nach dem QKD-Verfahren nicht mehr möglich ist.

Vor dem Hintergrund der vorstehenden Erläuterungen stellt sich die Aufgabe, eine Lösung bereitzustellen, welche auch auf längere Sicht eine effiziente und zuverlässige Verschlüsselung von Daten für deren sichere Übertragung in einem Netzwerk ermöglicht. Die zu schaffende Lösung soll dabei auch in vollvermaschten Netzen mit gegebenenfalls langen Übertragungswegen zu vertretbaren Kosten eine Sicherung der Datenverbindungen sowie eine Verschlüsselung der über diese Verbindung übertragenen Daten unter Nutzung quantensicherer Schlüssel ermöglichen.

Die Aufgabe wird durch ein Verfahren gemäß dem Patentanspruch 1 gelöst. Ein infolge des Einsatzes dieses Verfahrens kostengünstig zu realisierendes Netzwerk mit quantenkryptographisch gesicherten Verbindungen wird durch den unabhängigen Sachanspruch charakterisiert. Vorteilhafte Aus- und Weiterbildungen der erfindungsgemäßen Lösung sind durch die jeweiligen Unteransprüche gegeben.

Den Ausführungen zur Erläuterung des zur Lösung der Aufgabe vorgeschlagenen Verfahrens soll eine Übersicht der nachfolgend gebrauchten Abkürzungen vorangestellt werden. Demgemäß haben die verwendeten Abkürzungen folgende Bedeutung:
- A, B, C, D[1,n], E[1,n]: QSKs (quantensichere Schlüssel)
- AWG: Arrayed Waveguide Grating
- D: Daten
- DCN: Data Communication Network
- D-QSK: Daten QSK
- D-Verbindungen: Verbindungen für Nutzdaten
- DWDM: Dense Wavelength Division Multiplex
- M: Management
- M-QSK: QSK für Netzmanagement
- M-Verbindungen: Management Verbindungen
- N: Anzahl der Knoten
- O: Anzahl der OLAs
- OLA: Optical Line Amplifier (OLAs = Mehrzahl)
- QKD: Quantum Key Distribution
- QRNG: Quantum Random Number Generator
- OSC: Optical Supervisory Channel
- QSK: Quantum Safe Key (quantensicherer Schlüssel, Mehrzahl = QSKs)
- TDM: Time Division Multiplex
- Key: Schlüssel (Key Management = Schlüsselmanagement
- XOR: Exklusiv ODER (wobei es sich bei allen im Zusammenhang mit der hier erfolgenden Darstellung der Erfindung und in den Ansprüchen angesprochenen XORVerknüpfungen um bitweise XORVerknüpfungen handelt)

Das zur Lösung der Aufgabe vorgeschlagene Verfahren für eine deren Verteilung einschließende Nutzung quantensicherer kryptographischer Schlüssel (im weiteren auch QSKs) in einem Kommunikationsnetz geht von einem Netzwerk mit mindestens drei Netzwerkknoten aus. In diesem Netzwerk sind mindestens zwei Netzwerkknoten durch eine QKD-Verbindung (auch QKD-Link), das heißt über eine Quantum Key Distribution Verbindung, miteinander verbunden. Demnach sind diese beiden Netzwerkknoten zur Erzeugung gemeinsam genutzter symmetrischer Schlüssel untereinander über eine quantengesicherte Verbindung verbunden, über welche sie Schlüssel und sonstige Daten unter Einsatz eines Elemente der Quantenmechanik nutzenden kryptographischen Protokolls austauschen. Derartige, durch eine QKD-Verbindung miteinander verbundene Netzwerkknoten werden nachfolgend und in den Patentansprüchen zur sprachlichen Vereinfachung auch als QKD-Verbund bezeichnet. Die Begriffe Netzwerkknoten und Knoten werden nachfolgend und in den Patentansprüchen synonym verwendet.

Darüber hinaus umfasst das im Rahmen der Ausführungen zum erfindungsgemäßen Verfahren betrachtete Netzwerk aber auch mindestens einen Knoten, vorzugsweise mehrere oder sogar eine Mehrzahl von Knoten, welcher beziehungsweise welche nicht über eine QKD-Verbindung zu dem Netzwerk verfügen. Diese nachfolgend und in den Patentansprüchen als nicht-QKD-gestützte Knoten bezeichneten Netzwerkknoten werden aber durch den Einsatz des erfindungsgemäßen Verfahrens derart an das Netzwerk angebunden, dass dennoch in dem gesamten Netzwerk quantensichere Schlüssel (QSKs) verwendet werden können. Durch entsprechende Verteilung dieser QSKs und ihre Verwendung zur Verbindungssicherung und Datenverschlüsselung von Nicht-QKD-Verbindungen werden auch diese Verbindungen und somit letztlich alle Netzwerkverbindungen zu quantengesicherten Verbindungen. Demgemäß werden auch an als nicht-QKD-gestützte Knoten charakterisierte Netzwerkknoten QSKs zur Ermöglichung einer quantenkryptographisch gesicherten Datenübertragung zwischen diesen Knoten und dem Netzwerk verteilt.

Dazu wird gemäß dem vorgeschlagenen Verfahren für alle nicht-QKD-gestützten Knoten, welche nicht bereits über zwei disjunkte Netzwerkpfade mit einem QKD-Verbund verbunden sind, eine vollständig disjunkte Anbindung an einen QKD-Verbund geschaffen. An dieser Stelle sei angemerkt, dass in vielen in der Praxis existierenden Netzen die Netzwerkknoten ohnehin vollständig disjunkt, das heißt über zwei voneinander unabhängige Netzwerkpfade, mit dem Netzwerk beziehungsweise, bei einem vollvermaschten Netzwerk, mit allen Knoten des Netzwerks verbunden sind.

Erfindungsgemäß wird für eine zur Sicherung von Verbindungen sowie zur gesicherten Übertragung von Daten über diese Verbindungen dienende Verschlüsselung durch einen QKD-Verbund eine Anzahl erster QSKs generiert. Durch wiederholte XOR-Verknüpfung einzelner dieser QSKs untereinander sowie mit jeweils einem von einer Mehrzahl weiterer von demselben QKD-Verbund generierter QSKs D[1,n] werden mit Hilfe der ersten QKDs nacheinander einzelne der QSKs D[1,n] an die nicht-QKD-gestützten Knoten über unterschiedliche Netzwerkpfade ihrer disjunkten Verbindung mit dem QKD-Verbund verteilt.

Die Generierung und Verteilung der QSKs erfolgt dabei gesteuert durch ein zentrales Key Management in Zusammenarbeit mit einem an jedem Netzwerkknoten vorhandenen lokalen Key Management, wobei das zentrale und das lokale Key Management Teil des Netzmanagements sind. Soweit nachfolgend und in den Patentansprüchen von einer verschlüsselten Datenübertragung beziehungsweise Übertragung von Daten die Rede ist, kann es sich bei den Daten, sofern in einem jeweiligen Kontext nicht ausdrücklich etwas anderes angegeben ist, um Managementdaten oder Nutzdaten, aber auch um Schlüssel, nämlich Daten zu Schlüsseln, handeln.

Gemäß einer ersten insoweit vorgesehenen, vorteilhaften Verfahrensgestaltung werden durch den QKD-Verbund ein erster QSK (A), ein zweiter QSK (B) sowie ein dritter QSK (C) generiert, mittels derer die Übertragung der QSKs D[1,n] an die nicht-QKD-gestützten Knoten erfolgt, indem:
a) an jeden QSKs benötigenden, nicht-QKD-gestützten Knoten das Ergebnis der XOR-Verknüpfung des ersten QSK (A) mit dem zweiten QSK (B) über einen ersten Netzwerkpfad seiner disjunkten Anbindung an den QKD-Verbund übertragen wird und ferner
b) an jeden QSKs benötigenden, nicht-QKD-gestützten Knoten das Ergebnis der XOR-Verknüpfung des ersten QSK (A) mit dem dritten QSK (C) über einen nicht im Schritt a) genutzten Netzwerkpfad seiner disjunkten Anbindung an den QKD-Verbund übertragen wird sowie
c) an jeden QSKs benötigenden, nicht-QKD-gestützten Knoten das Ergebnis der XOR-Verknüpfung des zweiten QSK (B) mit dem dritten QSK (C) und mit jeweils einem der weiteren QSKs D[1,n] über nur einen der Netzwerkpfade seiner disjunkten Anbindung an den QKD-Verbund übertragen wird, wobei dann
d) bei jedem QSKs benötigenden, nicht-QKD-gestützten Knoten alle gemäß der Schritt a) bis c) bei ihm ankommenden Ergebnisse miteinander XOR verknüpft werden, so dass das hierdurch erhaltene Ergebnis dem jeweils einen, gemäß Schritt c) verknüpften und mit dem Verknüpfungsergebnis übertragenen QSK D[1,n] entspricht.

Gemäß einer Weiterbildung der zuvor dargestellten Verfahrensgestaltung wird zur weiteren Erhöhung der Sicherheit für Verbindungen und der verschlüsselten Datenübertragung eine Mehrzahl zusätzlicher, von dem QKD-Verbund generierter QSKs E[1,n] verwendet. Diese zusätzlichen QSKs E[1,n] werden an die nicht-QKD-gestützten Knoten verteilt, indem dem zuvor dargestellten Schritt d) folgend:
e) an jeden QSKs benötigenden, nicht-QKD-gestützten Knoten das Ergebnis einer XOR-Verknüpfung jeweils eines der zusätzlichen QSKs E[1,n] mit dem jeweils auch für die XOR-Verknüpfung gemäß Schritt c) verwendeten QSK der QSKs D[1,n] über einen nicht im Schritt c) genutzten disjunkten Netzwerkpfad übertragen wird und
f) bei jedem QSKs benötigenden, nicht-QKD-gestützte Knoten das im Schritt e) ankommende Ergebnis XOR verknüpft wird mit dem jeweils einen im Schritt d) ermittelten QSK D[1,n], wobei das hierdurch erhaltene Ergebnis dem jeweils einen gemäß Schritt e) verknüpften und mit dem Verknüpfungsergebnis übertragenen QSK E[1,n] entspricht.

Bei den zuvor genannten kryptographischen Schlüsseln, also bei dem QSK (A), dem QSK (B) und dem QSK (C) des QKD-Verbunds handelt es sich, wie gesagt, ebenso wie bei den weiteren QSKs D[1,n] und den zusätzlichen QSKs E[1,n], um durch den QKD-Verbund - in seiner Gesamtheit betrachtet - generierte Schlüssel. Jedoch muss es sich nicht zwingend bei allen Schlüsseln um QSKs handeln, die zeitgleich in dem ersten und in dem zweiten, durch die QKD-Verbindung miteinander verbundenen Knoten vorliegen. Vielmehr ist es gemäß einer vorteilhaften Ausbildung des Verfahrens vorgesehen, dass nur der erste QSK (A), der zweiter QSK (B) und der dritte (QSK (C) jeweils gleichzeitig in den Netzwerkknoten des QKD-Verbunds vorliegen, wohingegen die weiteren QSKs D[1,n] und die gegebenenfalls zur Erhöhung der Sicherheit generierten zusätzlichen QSKs E[1,n] jeweils durch einen Quantum Random Number Generator (QRNG), also einen Quantenzufallsgenerator, in einem der Netzwerkknoten des QKD-Verbunds generiert werden.

Die Heranziehung eines QRNG eines Netzwerkknotens des QKD-Verbunds für die Generierung der weiteren QSKs D[1,n] und der zusätzlichen QSKs E[1,n] hat dabei den Vorteil, dass sich hierdurch die Generationsrate für die solchermaßen erzeugten quantensicheren Schlüssel erhöht. Ferner beträgt der Capex, also der Aufwand, für einen QRNG ungefähr nur ein Zehntel im Vergleich zu einer QKD-Verbindung. Gegebenenfalls können dann nachfolgend auch mehrere QRNGs in dem Netzwerk, also QRNGs von anderen Netzwerkknoten zur Generierung von QSKs herangezogen werden, um die Generationsrate für die QSKs noch weiter zu erhöhen.

Die Inbetriebnahme eines nach dem Verfahren arbeitenden Netzwerks erfolgt entsprechend einer möglichen Ausgestaltung der Erfindung gemäß den aufeinanderfolgenden Verfahrensschritten
1. Ausführung einer ersten Initialisierungsphase, in welcher durch die Netzwerkknoten des QKD-Verbunds M-QSKs, nämlich QSKs zur Verschlüsselung von Managementdaten, das heißt von Daten mit Informationen für das Netzmanagement, generiert werden. Diese M-QSKs werden zum Aufbau quantengesicherter M-Kanäle zwischen den Netzwerkknoten, das heißt von Übertragungskanälen für Managementdaten, an die Netzwercknoten des Kommunikationsnetzes in der zuvor für die Verteilung beschriebenen Verfahrensweise verteilt und schließlich von diesen Netzwerkknoten für den Austausch von Managementdaten über die quantengesicherten M-Kanäle verwendet.
2. Ausführung einer zweiten Initialisierungsphase, in welcher durch die Netzwerkknoten des QKD-Verbunds D-QSKs zur Verschlüsselung von Nutzdaten generiert sowie zum Aufbau quantengesicherter D-Kanäle zwischen den Netzwerkknoten, also von quantengesicherten Übertragungskanälen für Nutzdaten, an die Netzwerkknoten des Kommunikationsnetzes verteilt werden. Auch die Verteilung der D-QSKs erfolgt dabei gemäß der zuvor beschriebenen Verfahrensweise mit den Schritten a) bis d) oder mit den Schritten a) bis f), wobei die solchermaßen verteilten QSKs schließlich durch alle Netzwerkknoten für den Austausch von Nutzdaten über die quantengesicherten D-Kanäle verwendet werden.
3. Ausführung der Arbeitsphase, in welcher weitere M-QSKs und D-QSKs durch den QKD-Verbund generiert und jeweils nach Bedarf an Knoten des Netzwerks verteilt sowie von diesen Netzwerkknoten zur Verschlüsselung über das Netzwerk übertragener Managementdaten und Nutzdaten verwendet werden. Die Verteilung der QSKs erfolgt auch in der Arbeitsphase gemäß den zuvor erläuterten Schritten a) bis d) beziehungsweise a) bis f).

Im Hinblick auf die Unterscheidung zwischen Verbindungen und Kanälen sei angemerkt, dass eine Verbindung zwischen zwei Knoten mehrere Kanäle umfassen kann, zum Beispiel durch die Nutzung von DWDM (Dense Wavelength Division Multiplexing). Die Verteilung der Schlüssel, also der QSKs, an die Netzwerkknoten wird dabei, wie bereits erwähnt, in allen drei Phasen durch ein zentrales Key Management in Zusammenarbeit mit einem an jedem Netzwerkknoten vorhandenen lokalen Key Management gesteuert.

In den Initialisierungsphasen werden QSKs durch den mindestens einen QKD-Verbund nach dem QKD-Verfahren generiert und an andere der N Knoten, nämlich an nicht-QKD-gestützte Knoten, per "Key Pre-distribution over networks relying on symmetric-key cryptography" verteilt, um sichere M- und D-Übertragungen bereitzustellen. Danach können in der Arbeitsphase M-QSKs und D-QSKs über das M-QKD-Netzwerk verteilt werden, um sichere M- und D-Verbindungen zwischen den N Knoten des Netzes durch Encryption mit M-QSKs und D-QSKs bereitzustellen, wobei die M- und D-QSKs zeitlich immer wieder zu erneuern sind.

Weitere QSKs können auch mit "quantum random number generators" (Quelle: idQuantique, Quantis Appliance-16M, https://marketing. idquantique.com/acton/attachment/11868/f-0221/1/-/-/-/- /Quantis%20Appliance_Brochure.pdf) innerhalb eines Knotens des QKD-Netzwerks erzeugt werden, wobei die Generationsrate der Zufallszahlen bei zum Beispiel 16 Mbit/s liegen kann.

Für hoch kapazitive, skalierbare und Kosten effektive Netze können Architekturen genutzt werden, die auf N x N AWG (arrayed waveguide grating) Komponenten basieren (Quelle: EP 2 945 304 A1), und die mit dem QKD-Verfahren und insbesondere mit der hier vorliegenden Erfindung kombiniert werden können.

Alle an die Netzwerkknoten verteilten QSKs werden nach einer gewissen QSK-Zeit, nämlich nach einer für sie festgelegten maximalen Gültigkeitsdauer, ausgetauscht. Vorzugsweise ist dabei die M-QSK-Zeit, also die Gültigkeitsdauer für M-QSKs, kürzer als die D-QSK-Zeit, also die Gültigkeitsdauer für D-QSKs. Bezüglich der M-QSKs kann aber auch ein one-time-padding vorgesehen sein, bei dem ein Schlüssel nicht für eine gewisse Gültigkeitsdauer, sondern stets nur für einen einzigen Übertragungsvorgang Gültigkeit hat.

Bei der Übertragung von M-QSKs sollten die dafür angewendeten M-QSKs zur Verschlüsselung (Encryption) nur ein einziges Mal angewendet und danach verworfen werden, das heißt die QSKs sollten nicht ein zweites Mal zur Encryption von weiteren Übertragungen angewendet werden. Für die Steuerung dessen, ist ebenfalls das Key Management zuständig, das die Erzeugung und Übertragung von QSKs zur Versorgung von Netzwerknoten sowie die weitere Key Verteilung und Verarbeitung steuert und kontrolliert. Management-Verbindungen können zum Beispiel für die Key-Übertragung und die -Verarbeitung genutzt werden. Diese Verbindungen werden selbst ebenfalls durch Encryption mit M-QSKs gesichert.

Eine wichtige Voraussetzung für die gemäß dem Verfahren durch die Nutzung unterschiedlicher XOR-Verknüpfungen erfolgende Verteilung von QSKs, also quantensicherer Schlüssel, an nicht-QKD-gestützte Knoten über Verbindungen, bei denen es sich nicht um QKD-Verbindungen handelt, ist es, dass die nicht-QKD-gestützten Knoten vollständig disjunkt an das Netz angebunden beziehungsweise mit einem QKD-Verbund verbunden sind oder aber, wenn dies nicht gegeben ist, eine solche vollständig disjunkte Anbindung geschaffen wird. Dies heißt indes nicht, dass die dafür erforderlichen unterschiedlichen (disjunkten) Netzwerkpfade stets durchgängig unter Nutzung desselben Übertragungsmediums ausgebildet werden müssen. Vielmehr besteht eine mögliche Verfahrensgestaltung darin, dass der Aufbau der vollständig disjunkten Verbindungen zwischen einem nicht-QKD-gestützten Knoten und einem QKD-Verbund medienübergreifend erfolgt, indem dafür disjunkte Netzwerkpfade unter Nutzung unterschiedlicher physischer Übertragungsmedien, wie beispielsweise einerseits über leitungsgebundene Übertragungspfade oder Pfadabschnitte oder über funkbasierte oder optisch basierte Pfade oder Pfadabschnitte oder aber über millimeterwellenbasierte (zum Beispiel 60 GHz oder 300 GHz) oder THz-basierte (THz = Tera Hertz) Pfade oder Pfadabschnitte, bereitgestellt werden.

Ein Netzwerk, das heißt ein vollvermaschtes Netz für die die Datenübertragung unter Nutzung quantensicherer kryptographischer Schlüssel gemäß dem zuvor erläuterten Verfahren, weist N Netzwerkknoten, nämlich mindestens drei Netzwerkknoten auf. Mindestens zwei über eine QKD-Verbindung miteinander verbundene Netzwerkknoten des Netzwerks bilden einen QKD-Verbund aus, wobei aber jedenfalls alle Verbindungen zwischen den N Netzwerknoten und die zwischen den Netzwerknoten über diese Verbindung übertragenen Daten durch QSKs gesichert sind. Zur Steuerung des Generierens und des Verteilens von Schlüsseln verfügt das Netzwerk als Teil eines Netzmanagements über ein zentrales Key Management und an jedem Netzwerkknoten über ein mit dem zentralen Key Management in einer Wirkverbindung stehendes lokales Key Management.

Trotzdem das gesamte Netzwerk quantengesichert ist, also alle Verbindungen zwischen den Netzwerknoten und die darüber übertragenen Daten durch QSKs gesichert sind, bestehen in dem Netzwerk erfindungsgemäß weniger als (N-1) QKD-Verbindungen zwischen den N Netzwerkknoten. Dabei besteht aber zu allen nicht über eine QKD-Verbindung an das Netzwerk angebundenen Knoten, eine von einem QKD-Verbund ausgehende, vollständig disjunkte Verbindung über mindestens zwei voneinander vollständig unabhängige Netzwerkpfade. Gemäß einer besonderen Ausbildungsform kann in dem gesamten Netzwerk, auch unabhängig von seiner Größe, das heißt von der Anzahl seiner Knoten, sogar nur eine QKD-Verbindung zwischen zwei der N Netzwerkknoten bestehen.

Das Netzmanagement enthält die FCAPS Funktionalitäten (Fault-, Configuration-Accounting-, Performance-, Security- Management), die auch Bestandteile des Key Managements sind. Das Key Management enthält unter anderem
- Ein übergeordnetes, redundant vorhandenes Key Management mit Monitoring, Steuerung, und Reporting der übergeordneten Funktionalitäten, mit M-QSK-Verwaltung und D-QSK-Verwaltung, -Speicherung, -Bereitstellung, -Verteilung und -Monitoring sowie Überwachung und Steuerung der QSK-Zeiten,
- ein verteiltes Key Management mit Regel-Funktionalitäten in den einzelnen Netzelementen und mit Monitoring, Steuerung sowie Reporting auf der Netzelement-Ebene,
- eine Konfigurationsinstanz (Configuration) für den Report über den Status aller Netz-Komponenten und deren Parameter, nämlich Reports beispielsweise über
   ■ QKD-Verbindungen zwischen welchen Knoten,
   ■ QSK-Generationsrate,
   ■ QRNG, in welchen Knoten vorhanden, QSK-Generationsrate,
   ■ Anzahl der Netzwerkknoten N,
   ■ Status der Übertragungsverbindungen für die QSKs Verteilung,
   ■ Steuerung der QSKs Verteilung und Übertragung zu den einzelnen Netzwerkknoten,
   ■ Anzahl der mit QSKs zu versorgenden Elemente pro Netzwerkknoten,
   ■ Zuordnung der QSKs für jedes einzelne Element im allen Netzwercknoten,
   ■ Steuerung der QSKs Anwendungen in den einzelnen Netzwerkknoten,
   ■ Steuerung des QSK Austausches in jedem einzelnen Netzelement,
   ■ Status des QSKs Vorrates in jedem Netzwerkknoten und im zentralen Management,
   ■ QSK-Zeiten für jede Verbindung im Netz bereitstellen,
- eine Meldungsinstanz (Notification), wobei das übergeordnete Key Management Status Meldungen von den Netzelementen anfordern und die Netzelemente Notifikationen an das Key Management senden können, zum Beispiel um
   ■ QSKs anzufordern, falls die vorrätige Zahl an QSKs einen Schwellwert unterschritten hat,
   ■ Status, Warnung, Fehler oder Desaster Zustände an das übergeordnete Management zu melden,
   ■ die Gefahr eines möglichen Anschlags zu melden,
   ■ sich zyklisch zu melden (Herzschlag),
   ■ den Empfang von QSKs zu bestätigen,
- eine Fehlererkennungsinstanz, (Fault), mit den Aufgaben
   ■ Fehler erkennen, kategorisieren, lokalisieren, melden, Alarm auslösen,
   ■ Gegenmaßnahmen vorschlagen, einleiten und Maßnahmen einleiten,
   ■ Angriffe erkennen und Maßnahmen einleiten,
   ■ Alarme Melden und Maßnahmen einleiten,
- Leistungsinstanz (Performing), betreffend Monitoring, QSK Status,
- Sicherheitsinstanz (Security), betreffend Monitoring, QSK Status.

Hinsichtlich der Art von Netzwerken und ihrer Strukturen, der Art der in Netzwerken verwendeten physischen Medien und/oder Topologien sowie der Konnektivitäten sind für die Erfindung zum Beispiel folgende Anwendungsmöglichkeiten gegeben.
A) Anwendungen, in verschiedenen Netzebenen, Netzstrukturen, spezifischen Netzen
   - Home-Anschluss (DSL) (Massenmarkt)
   - Gebäude-Anschluss (DSL)
   - Enterprise-Netze
   - Firmen-Netze
   - Business-Netze
   - In-House-Netze
   - Outdoor-Netze
   - Campus-Netze
   - Access-Netze
   - City-Netze
   - Regional-Netze
   - Core/Backbone-Netze
   - Long-Haul, Weitverkehrsverbindungen
   - Leitungsgebundene Netze
   - Drahtlose Netze (beispielsweise 3G, 4G, LTE, 5G, etc.)
   - loT Netze (Internet of Things Networks)
   - Applikation-Netze
B) Verbindungen, Netze
   - Leitungsgebundene Glasfaser Verbindungen/Netze
   - Leitungsgebundene Kupfer Verbindungen/Netze
   - Drahtlose Verbindungen/Funknetze (beispielsweise 3G, 4G, LTE, 5G, etc.)
   - Drahtlose mm-Wellen Verbindungen/Netze
   - Hybride Verbindungen/Netze (leitungsgebunden, drahtlos)
   - 60 GHz oder auch 300 GHz Bereich Verbindungen/Netze
   - Tera-Hertz Verbindungen/Netze
   - Optische Freistrahl Verbindungen/Netze
   - Visible Light communication Verbindungen/Netze
   - Management Verbindungen/Netze
   - DCN-Verbindungen/-Netze
C) Topologien
   - Ring-Netz-Topologie
   - Stern-Netz-Topologie
   - teilvermaschte oder vollvermaschte Topologie
D) Konnektivitäten
   - Punkt-zu-Punkt Verbindungen
   - Teilvermaschte Netze
   - Vollvermaschte Netze
   - Ring-Netze
   - Stern-Netze

Anhand von Zeichnungen sollen nachfolgend beispielhaft Ausführungsvarianten des erfindungsgemäßen Verfahrens aufgezeigt und beispielhafte Einsatzmöglichkeiten für das Verfahren anhand unterschiedlich ausgebildeter Netzwerke dargestellt werden. Die Zeichnungen zeigen im Einzelnen.
- Fig. 1: ein aus drei Netzwerkknoten bestehendes Netzwerk zur Erläuterung von möglichen Ausführungsvarianten des Verfahrens
- Fig. 2: ein vollvermaschtes Netz mit 12 Netzwerkknoten
- Fig. 3: die Nutzung des Verfahrens bei einer möglichen Ausbildungsform für ein Weitverkehrsnetz
- Fig. 4: die Nutzung des Verfahrens bei einer anderen Ausbildungsform für ein Weitverkehrsnetz

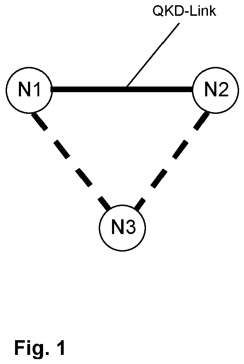

Anhand der sehr einfachen, in der Fig. 1 schematisch gezeigten Ausbildungsform eines Kommunikationsnetzes mit einem nur aus drei Netzwerkknoten bestehenden optischen Netzwerk sollen nachfolgend beispielhaft vier Ausführungsvarianten des erfindungsgemäßen Verfahrens erläutert werden. Das in der Fig. 1 gezeigte Beispiel eines Kommunikationsnetzes mit drei Netzwerkknoten N1, N2 und N3, geht von einem Netzwerk aus, bei dem die Verbindung zwischen den Netzwerkknoten N1 und N2 eine QKD-Verbindung (QKD-Link) ist, so dass diese Knoten einen QKD-Verbund bilden. An diesen QKD-Verbund ist der Netzwerkknoten N3 als nicht-QKD-gestützter Knoten angebunden, das heißt weder bei der zwischen ihm und den Netzwerkknoten N1 bestehenden Verbindung noch bei der zwischen N3 und N2 bestehenden Verbindung handelt es sich um eine QKD-Verbindung, wobei aber diese Verbindungen aufgrund der Anwendung des erfindungsgemäßen Verfahrens dennoch QKD-gesichert sind. Demnach sind sowohl diese Verbindungen selbst als auch die über sie übertragenen Daten - seien es nun Schlüssel, Managementdaten oder Nutzdaten - durch QSKs, also quantensichere kryptographische Schlüssel gesichert. Anhand der vier Ausführungsvarianten des Verfahrens werden beispielhaft unter Anwendung des erfindungsgemäßen Grundprinzips bestehende Möglichkeiten der Schlüsselverteilung in dem Netzwerk, nämlich insbesondere der Übertragung von QSKs an den Netzwercknoten N3 erläutert sowie die im Grunde kaum zu erfüllenden Erfordernisse für eventuelle, Erfolg versprechende Angriffe aufgezeigt.

### 1. Verfahrensvariante

Sowohl für die Initialisierungsphase als auch für die Arbeitsphasen des Netzwerkes soll eine QSK-Übertragung zwischen den Knoten N1 und N2 zum Knoten N3 erfolgen, mit folgenden Voraussetzungen:
- Es besteht eine QKD-Verbindung zwischen den Knoten N1 und N2.
- Der Knoten N3 ist über ein Glasfasernetz, zum Beispiel ein DWDM-System mit den Knoten N1 und N2 disjunkt verbunden, das heißt auf zwei topologisch unterschiedlichen Wegen.

Bei der nun beschriebenen Verfahrensvariante könnte ein Angreifer allenfalls Erfolg haben, wenn er alle, über verschiedene räumliche, zeitliche, optische Wellenlängen und Medien gehenden Übertragungen mithört und er dies entsprechend korrelieren kann.

**Knoten**

| | | |
|---|---|---|
| N1 | N2 | N3 |

### Prinzip

N1 <- - QKD-Verbindungen - -> N2

Generierte M- und D-QSKs nach dem QKD Prinzip, die in den Knoten N1 und N2 gleichzeitig vorliegen.

**Knoten**

| | | |
|---|---|---|
| N1 | N2 | N3 |

| | |
|---|---|
| QSKs A, B, C, D[1,n] | QSKs A, B, C, D[1,n] |

M-QSK-Übertragungen von N1 nach N3 über das Netz ohne die Nutzung von QKD-Verbindungen oder QSK gesicherten Verbindungen
N1-------------------(QSKA ⊕ QSK B)-------------------> N3

M- und D-QSK-Übertragungen von N2 nach N3 über das Netz ohne die Nutzung von QKD-Verbindungen oder QSK gesicherten Verbindungen
N2 -------(QSK A ⊕ QSK C) ------ > N3
N2 - (QSK B ⊕ QSK C ⊕ QSKs D[1,n] - > N3

Übertragene und generierte M- und D-QSKs, die im Knoten N3 vorliegen:
(QSK A ⊕ QSK B); (QSK A ⊕ QSK C); (QSK B ⊕ QSK C ⊕ QSKs D[1,n])

Übertragene und generierte M- und D-QSKs, die im Knoten N3 auch unter Anwendung der assoziativen und kommutativen XOR Verknüpfungen vorliegen:
(QSK A ⊕ QSK B); (QSK A ⊕ QSK C); (QSK B ⊕ QSK C ⊕ QSKs D[1,n]); (QSK A ⊕ QSK B) ⊕ (QSK A ⊕ QSK C) ⊕ (QSK B ⊕ QSK C ⊕ QSKs D[1,n])= QSKs D[1,n]

Damit liegen im allen drei Netzwerkknoten N1, N2 und N3 die QSKs D[1,n] vor, die als M-QSKs oder D-QSKs für die weiteren Encryption D- und M-Verbindungen und Übertragungen genutzt werden können.

Die Prüfung auf einen Angriff zwischen den Knoten N1 und N3 ergibt:
Der Angreifer könnte als Daten aus den von N1 nach N3 unidirektional übertragenen Datenströmen (QSK A ⊕ QSK B) extrahieren. Damit ist aber ein erfolgreicherAngriff zur Extrahierung der QSKs D[1,n] nicht möglich.

Die Prüfung auf einen Angriff zwischen den Knoten N2 und N3 ergibt:
Der Angreifer könnte als Daten aus den von N1 nach N3 unidirektional übertragenen Datenströmen (QSK A⊕ QSK C); (QSK B ⊕ QSK C ⊕ QSKs D[1,n]) extrahieren. Damit ist ein erfolgreicher Angriff zur Extrahierung von QSKs D[1,n] nicht möglich.

Die Prüfung auf einen Angriff sowohl zwischen den Knoten N1 und N3 als auch zwischen den Knoten N2 und N3 ergibt:
Der Angreifer könnte als Daten aus den von N1 nach N3 unidirektional übertragenen Datenströmen (QSK A ⊕ QSK B) extrahieren. Aus den von N2 nach N3 unidirektional übertragenen Datenströmen könnte der Angreifer als Daten (QSK A ⊕ QSK C) und (QSK B ⊕ QSK C ⊕ QSKs D[1,n]) extrahieren. Damit wäre ein erfolgreicher Angriff zur Extrahierung der QSKs D[1,n] durch (QSK A ⊕ QSK B) ⊕ (QSK A ⊕ QSK C) ⊕ (QSK B ⊕ QSK C ⊕ QSKs D[1,n])= QSKs D[1,n] möglich.

Für einen erfolgreichen Angriff wären aber folgende Umstände notwendig:
- An zwei verschiedenen disjunkten örtlichen Verbindungen, nämlich an den Verbindungen zwischen N1 und N3 sowie zwischen N2 und N3 müssten QSKs von einem Glasfaserkabel abgegriffen und korreliert werden,
- Von drei verschiedenen Signalen, die über verschiedene Verbindungen zu unterschiedlichen Zeiten übertragen werden müssten QSKs abgegriffen und korreliert werden,
- Weitere Encryption Maßnahmen auf anderen Layern (Ethernet, IP, Applikationen, Management) müssten gehackt werden,
- Weitere Management-seitige Verfahren müssten gehackt und korreliert werden, zum Beispiel Übertragung von aktiven (gerade angewendeten) und passiven QSKs in denselben Datenpaketen, Entkopplung von zusammengehörigen QSKs oder zum Beispiel uni- oder bi-direktionale QSKs, die in verschiedenen optischen Wellenlängen Kanälen (DWDM, dense wavelength division multiplex) oder in verschiedenen zeitlichen Kanälen (TDM, Time Division Multiplex) übertragen werden, etc.

Das Hacken der QSKs ist aber erst der erste Schritt für einen Angriff. Im zweiten Schritt des Angriffs müssten die entwendeten QSKs entsprechend angewendet und korreliert werden, wobei folgende Umstände zusätzlich notwendig wären:
- Aus dem entwendeten Vorrat an QSKs muss der für die zugeordnete Verbindung (N1 - N3, oder N2 - N3, oder allgemein (Nx - Ny) angewendet werden, was im Netz durch das Key Management gesteuert wird,
- Der entsprechende QSK ist nicht nur einer bestimmten Verbindung zugeordnet, sondern ist auch nur in einem bestimmten Zeitfenster einsetzbar, was im Netz durch das Key Management gesteuert wird,
- Der Angreifer muss auch die entsprechend zugeordnete Verbindung anzapfen, um räumlich, zeitlich und DWDM-technisch den Angriff durchführen zu können,
- Zusätzlich können für die unidirektionalen Verbindungen einer bidirektionalen Verbindung auch unterschiedliche QSKs zugeordnet werden, was im Netz durch das Key Management gesteuert wird

### 2. Verfahrensvariante

Gemäß der 2. Verfahrensvariante wird im Zusammenhang mit der Generierung und Verteilung von Schlüssel zur Sicherung von Managementverbindungen und der über die übertragenen Managementdaten die Anzahl der M-QSKs erhöht, um die Sicherheit der QSK-Verteilung zu erhöhen.

Für die Initialisierungsphase als auch für die Arbeitsphasen des Netzes soll eine QSK-Übertragung zwischen den Knoten N1 und N2 zum Knoten N3 erfolgen, mit folgenden Voraussetzungen:
- Es besteht eine QKD-Verbindung zwischen den Knoten N1 und N2.
- Der Knoten N3 ist über ein Glasfasernetz, zum Beispiel ein DWDM-System mit den Knoten N1 und N2 disjunkt verbunden, das heißt über zwei topologisch unterschiedliche Wege.

Bei dieser Verfahrensvariante könnte ein Angreifer Erfolg haben, wenn er alle, über verschiedene räumliche, zeitliche, optische Wellenlängen und Medien gehenden Übertragungen mithört und er dies entsprechend korrelieren kann.

| | | |
|---|---|---|
| Knoten | | |
| N1 | N2 | N3 |
| Prinzip | | |
| N1 <- - QKD-Verbindung - -> | N2 | |

Generierte M- und D-QSKs nach dem QKD Prinzip, die in den Knoten N1 und N2 gleichzeitig vorliegen.

| | | |
|---|---|---|
| Knoten | | |
| N1 | N2 | N3 |
| QSKs A, B, C, D[1,n]; QSKs E[1,n] | QSKs A, B, C, D[1,n]; QSKs E[1,n] | |
| | | |

M-QSK-Übertragungen von N2 nach N3 über das Netz ohne die Nutzung von QKD-Verbindungen oder QSK gesicherten Verbindungen

| | | |
|---|---|---|
| Knoten | | |
| N1 | N2 | N3 |
| | N2 -------(QSK A ⊕ QSK C) ------ > | N3 |

M- und D-QSK-Übertragungen von N1 nach N3 über das Netz ohne die Nutzung von QKD-Verbindungen oder QSK gesicherten Verbindungen

| |
|---|
| N1-------------------(QSKA ⊕ QSK B)-------------------> N3 |
| N1 --------------(QSKB ⊕ QSK C ⊕ QSKs D[1,n])-------------> N3 |

Übertragene und generierte M- und D-QSKs, die im Knoten N3 vorliegen:
(QSK A ⊕ QSK C); (QSK A ⊕ QSK B); (QSK B ⊕ QSK C ⊕ QSKs D[1,n])

Übertragene und generierte M- und D-QSKs, die im Knoten N3 auch unter Anwendung der assoziativen und kommutativen XOR Verknüpfungen vorliegen:
(QSK A ⊕ QSK B); (QSK A ⊕ QSK C); (QSK B ⊕ QSK C ⊕ QSKs D[1,n]); (QSK A ⊕ QSK B) ⊕ (QSK A ⊕ QSK C) ⊕ (QSK B ⊕ QSK C ⊕ QSKs D[1,n])= QSKs D[1,n]

Damit liegen im allen drei Knoten N1, N2 und N3 die QSKs D[1,n] vor, die als M-QSKs oder D-QSKs für die weiteren zu Encryption D- und M- Verbindungen und Übertragungen genutzt werden können.

Zur weiteren Steigerung der Sicherheit soll eine weitere Übertragung von generierten M-QSKs und D-QSKs E[1,n] vom Knoten N2 zum Knoten N3 durchgeführt werden, die mit einem aus den vorhandenen M-QSKs D[1,n]- gesichert werden soll.

| | | |
|---|---|---|
| Knoten | | |
| N1 | N2 | N3 |
| | N2 - - - (QSKs D[1,n] ⊕ QSKs E[1,n]) - - - >N3 | |

Übertragene und generierte M- und D-QSKs, die im Knoten N3 auch unter Anwendung der assoziativen und kommutativen XOR Verknüpfungen vorliegen:
QSKs D[1,n]; (QSKs D[1,n] ⊕ QSKs E[1,n])

Anwendung der assoziativen und kommutativen XOR Funktion ergibt:
(QSKs D[1,n] ⊕ QSKs D[1,n] ⊕ QSKs E[1,n]) = QSKs E[1,n].

Damit liegen im allen Knoten die QSKs D[1,n] und die QSKs E[1,n] vor, die als M-QSKs oder D-QSKs für die Encryption von weiteren M- oder D-Übertragungen genutzt werden können.

Insbesondere können aus den vorhandenen Vorräten an QSKs D[1,n] und QSKs E[1,n] auch weitere M-QSKs und D-QSKs, zum Beispiel durch XOR Verknüpfungen, abgeleitet werden, die als weitere M-QSKs oder D-QSKs genutzt werden können, wobei das Verfahren durch das Key Management gesteuert wird.

Darüber hinaus kann die Sicherheit durch Hinzunahme von weiteren QSKs F[1,n], QSKs G[1,n]... noch weitererhöht werden, wobei das Verfahren selbstverständlich auch in diesem Fall durch das Key Management gesteuert werden muss.

Die Prüfung auf einen Angriff zwischen den Knoten N1 und N3 ergibt:
Der Angreifer könnte als Daten aus den von N1 nach N3 unidirektional übertragenen Datenströmen (QSK A ⊕ QSK B) und (QSK B ⊕ QSK C ⊕ QSKs D[1,n]) extrahieren. Damit ist aber ein erfolgreicher Angriff zur Extrahierung der QSKs E[1,n] nicht möglich.

Die Prüfung auf einen Angriff zwischen den Knoten N2 und N3 ergibt:
Der Angreifer könnte als Daten aus den von N1 nach N3 unidirektional übertragenen Datenströmen (QSK A ⊕ QSK C) und (QSKs D[1,n] ⊕ QSKs E[1,n]) extrahieren. Damit ist ein erfolgreicher Angriff zur Extrahierung von QSKs E[1,n] nicht möglich.

Die Prüfung auf einen Angriff sowohl zwischen den Knoten N1 und N3 als auch zwischen den Knoten N2 und N3 ergibt:
Der Angreifer könnte als Daten aus den von N1 nach N3 unidirektional übertragenen Datenströmen (QSK A ⊕ QSK B) (QSK B ⊕ QSK C ⊕ QSKs D[1,n]) extrahieren. Aus den von N2 nach N3 unidirektional übertragenen Datenströmen könnte der Angreifer als Daten (QSK A ⊕ QSK C) (QSKs D[1,n] ⊕ QSKs E[1,n]) extrahieren. Damit ist ein erfolgreicher Angriff zur Extrahierung der QSKs D[1,n] und QSKs E[1,n] möglich durch
QSK A ⊕ QSK B) ⊕ (QSK A ⊕ QSK C) ⊕ (QSK B ⊕ QSK C ⊕ QSKs D[1,n]) = QSKs D[1,n] und durch
(QSK A ⊕ QSK B) ⊕ (QSK A ⊕ QSK C) ⊕ (QSK B ⊕ QSK C ⊕ QSK D[1,n]) ⊕ (QSKs D[1,n] ⊕ QSKs E[1,n]) = QSKs E[1,n].

Für einen erfolgreichen Angriff wären aber folgende Umstände notwendig:
- An zwei verschiedenen disjunkten örtlichen Verbindungen, nämlich an den Verbindungen zwischen N1 und N3 sowie N2 und N3 müssten QSKs von einem Glasfaserkabel abgegriffen und korreliert werden,
- Von vier verschiedenen Signalen, die über verschiedene Verbindungen zu unterschiedlichen Zeiten übertragen werden müssen QSKs abgegriffen und korreliert werden,
- Weitere Encryption Maßnahmen auf anderen Layern (Ethernet, IP, Applikationen, Management) oder gegebenenfalls auf anderen, disjunkt über andere Medien, zum Beispiel drahtlos (3G, 4G, LTE, 5G - es handelt sich dann nicht mehr um ein rein optisches Netzwerk), geführten Pfaden müssten gehackt werden,
- Weitere Management-seitige Verfahren müssen gehackt und korreliert werden, zum Beispiel Übertragung von aktiven (gerade angewendeten) und passiven QSKs in denselben Datenpaketen, Entkopplung von zusammengehörigen QSKs oder zum Beispiel uni- oder bi-direktionale QSKs, die in verschiedenen optischen Wellenlängen Kanälen (DWDM, dense wavelength division multiplex) oder in verschiedenen zeitlichen Kanälen (TDM, Time Division Multiplex) oder gegebenenfalls über andere Medien, zum Beispiel drahtlos (3G, 4G, LTE, 5G), übertragen werden, etc.

Wie bereits zur ersten Verfahrensvariante ausgeführt, ist das Hacken der QSKs nur der erste Schritt für einen Angriff. Die entwendeten QSKs müssten außerdem entsprechend angewendet und korreliert werden.

Dazu müssten auch betreffend die 2. Verfahrensvariante unter anderem die schon zur 1. Verfahrensvariante aufgeführten Bedingungen erfüllt sein: Diese müssen auf die für die entsprechende Verbindung vorgesehenen QSKs aus dem entwendeten Vorrat an QSKs angewendet werden, der jeweilige QSK muss innerhalb des richtigen Zeitfensters eingesetzt werden, der Angreifer muss auch die entsprechend zugeordnete Verbindung anzapfen, um räumlich, zeitlich und DWDM technisch oder auch medientechnisch (drahtlos) den Angriff zu führen und er muss berücksichtigen, dass gegebenenfalls den unidirektionalen Verbindungen einer bidirektionalen Verbindung unterschiedliche QSKs zugeordnet sein können.

### 3. Verfahrensvariante

Für die Initialisierungsphase als auch für die Arbeitsphasen des Netzes soll eine QSK-Übertragung zwischen den Knoten N1 und N2 zum Knoten N3 erfolgen, mit folgenden Voraussetzungen:
- Es besteht eine QKD-Verbindung zwischen den Knoten N1 und N2
- Der Knoten N3 ist über ein Glasfasernetz, zum Beispiel ein DWDM-System mit den Knoten N1 und N2 disjunkt verbunden, das heißt auf zwei topologisch unterschiedlichen Wegen
- Der Knoten N1 enthält einen QRNG mit 16 Mbit/s Generationsrate

Auch bei dieser Verfahrensvariante kann ein Angreifer Erfolg haben, wenn er alle, über verschiedene räumliche, zeitliche, optische Wellenlängen und Medien gehenden Übertragungen mithört und entsprechend korrelieren kann.

**Knoten**

| | | |
|---|---|---|
| N1 | N2 | N3 |

**Prinzip**

| | | |
|---|---|---|
| N1 | <- - QKD-Verbindung - -> | N2 |

Generierte M-QSKs nach dem QKD Prinzip, die in den Knoten N1 und N2 gleichzeitig vorliegen.

| | |
|---|---|
| QSKs A, B, C | QSKs A, B, C |

Generierte M- QSKs und D-QSKs, die durch einen QRNG im Knoten N1 generiert wurden und durch die Übertragungen über die sichere QKD-Verbindung in beiden Knoten N1 und N2 vorliegen:

| | |
|---|---|
| QSKs D[1,n] | QSKs D[1,n] |

M-QSK-Übertragungen von N1 nach N3 über das Netz ohne die Nutzung von QKD-Verbindungen oder QSK gesicherten Verbindungen:

**Knoten**

| | | |
|---|---|---|
| N1 | N2 | N3 |

N1-------------------(QSKA ⊕ QSK B)-------------------> N3

M- und D-QSK-Übertragungen von N2 nach N3 über das Netz ohne die Nutzung von QKD-Verbindungen oder QSK gesicherten Verbindungen:
N2 -------(QSK A ⊕ QSK C) ------ > N3
N2 - (QSK B ⊕ QSK C ⊕ QSKs D[1,n]) - > N3

Übertragene und generierte M- und D-QSKs, die im Knoten N3 vorliegen:
(QSK A ⊕ QSK B); (QSK A ⊕ QSK C); (QSK B ⊕ QSK C ⊕ QSKs D[1,n]).

Übertragene und generierte M- und D-QSKs, die im Knoten N3 auch unter Anwendung der assoziativen und kommutativen XOR Verknüpfungen vorliegen:
(QSK A ⊕ QSK B); (QSK A ⊕ QSK C); (QSK B ⊕ QSK C ⊕ QSKs D[1,n]);
(QSK A ⊕ QSK B) ⊕ (QSK A ⊕ QSK C) ⊕ (QSK B ⊕ QSK C ⊕ QSKs D[1,n])= QSKs D[1,n].

Damit liegen im allen drei Knoten N1, N2 und N3 die QSKs D[1,n] vor, die als M-QSKs oder D-QSKs für die weitere Encryption von D- und M- Verbindungen und Übertragungen genutzt werden können.

Die Prüfung auf einen Angriff zwischen den Knoten N1 und N3 ergibt:
Der Angreifer könnte als Daten aus den von N1 nach N3 unidirektional übertragenen Datenströmen (QSK A ⊕ QSK B) extrahieren. Damit ist ein erfolgreicher Angriff zur Extrahierung der QSKs D[1,n] nicht möglich.

Die Prüfung auf einen Angriff zwischen den Knoten N2 und N3 ergibt:
Der Angreifer könnte als Daten aus den von N1 nach N3 unidirektional übertragenen Datenströmen (QSK A ⊕ QSK C); (QSK B ⊕ QSK C ⊕ QSKs D[1,n]) extrahieren. Damit ist ein erfolgreicher Angriff zur Extrahierung von QSKs D[1,n] nicht möglich.

Die Prüfung auf einen Angriff sowohl zwischen den Knoten N1 und N3 als auch zwischen den Knoten N2 und N3 ergibt:
Der Angreifer könnte als Daten aus den von N1 nach N3 unidirektional übertragenen Datenströmen (QSK A ⊕ QSK B) extrahieren. Aus den von N2 nach N3 unidirektional übertragenen Datenströmen könnte der Angreifer als Daten
(QSK A ⊕ QSK C) extrahieren. Der Angreifer könnte außerdem aus den von N1 nach N3 unidirektional übertragenen Datenströmen (QSK B ⊕ QSK C ⊕ QSKs D[1,n]) als Daten extrahieren. Damit ist ein erfolgreicher Angriff zur Extrahierung der QSKs D[1 ,n] möglich: (QSK A ⊕ QSK B) ⊕ (QSK A ⊕ QSK C) ⊕ (QSK B ⊕ QSK C ⊕ QSK D[1,n]) = QSK D[1,n].

Für einen erfolgreichen Angriff wären aber folgende Umstände notwendig:
- An zwei verschiedenen disjunkten örtlichen Verbindungen, nämlich an den Verbindungen zwischen N1 und N3 sowie N2 und N3 müssten QSKs von einem Glasfaserkabel abgegriffen und korreliert werden.
- Von drei verschiedenen Signalen, die über verschiedene Verbindungen zu unterschiedlichen Zeiten übertragen werden müssen QSKs abgegriffen und korreliert werden.
- Weitere Encryption Maßnahmen auf anderen Layern (Ethernet, IP, Applicationen, Management) müssten gehackt werden.
- Weitere Management-seitige Verfahren müssen gehackt und korreliert werden, zum Beispiel Übertragung von aktiven (gerade angewendeten) und passiven QSKs in denselben Datenpaketen, Entkopplung von zusammengehörigen QSKs, zum Beispiel uni- oder bidirektionale QSKs, die in verschiedenen optischen Wellenlängen Kanälen (DWDM, dense wavelength division multiplex) oder in verschiedenen zeitlichen Kanälen (TDM, Time Division Multiplex) übertragen werden, etc.

Auch bei dieser Verfahrensvariante müssen für einen erfolgreichen, sich nicht auf das Hacken der QSKs beschränkenden Angriff, also letztlich für das Hacken von Verbindungen und übertragenen Daten durch entsprechende Anwendung der entwendeten QSKs die weiteren, schon im Zusammenhang mit den beiden vorher erläuterten Verfahrensvarianten genannten Bedingungen und Gegebenheiten erfüllt sein.

### 4. Verfahrensvariante

Sowohl für die Initialisierungsphase als auch für die Arbeitsphase des Netzwerkes soll eine QSK-Übertragung zwischen den Netzwerkknoten N1 und N2 zum Netzwerkknoten N3 erfolgen, mit folgenden Voraussetzungen:
- Es besteht eine QKD-Verbindung zwischen den Netzwerkknoten N1 und N2.
- Der Netzwerkknoten N3 ist über ein Glasfasernetz, zum Beispiel ein DWDM-System mit den Knoten N1 und N2 disjunkt verbunden, das heißt auf zwei topologisch unterschiedlichen Wegen.
- Der Netzwerkknoten N3 ist auf mindestens einem weiteren Pfad mit den Knoten N1 oder N2 verbunden, zum Beispiel über ein vom Übertragungsnetz entkoppeltes DCN (Data Communication Network, Netz Management), andere oder auch zusätzliche Möglichkeiten ergeben sich zum Beispiel über Mobilfunknetze (LTE, 5G, etc.) oder über Applikationen (e-mail, SMS, etc.).
- Der Netzwerkknoten N1 enthält einen QRNG mit 16 Mbit/s Generationsrate.

Bei dieser Verfahrensvariante hat ein Angreifer keinen Erfolg, wenn er alle Übertragungswege des Glasfasernetzes abhört. Er könnte allenfalls Erfolg haben, wenn er alle, über die verschiedenen räumlichen, zeitlichen, optischen Wellenlängen und Medien gehenden Übertragungen des Netzes mithört und wenn er zusätzlich insbesondere auch die Übertragungen im externen DCN-Netz mithört sowie alle Signale entsprechend korrelieren kann.

**Knoten**

| | | |
|---|---|---|
| N1 | N2 | N3 |

**Prinzip**

| | | |
|---|---|---|
| N1 | <- - QKD-Verbindung - -> | N2 |

Generierte M-QSKs nach dem QKD Prinzip, die in den Knoten N1 und N2 gleichzeitig vorliegen:

**Knoten**

| | | |
|---|---|---|
| N1 | N2 | N3 |

| | |
|---|---|
| QSKs A, B, C | QSKs A, B, C |

Generierte M- und D-QSKs, die durch einen QRNG im Knoten N1, und durch die Übertragungen über die sichere QKD-Verbindung in beiden Knoten N1 und N2 vorliegen:

| | |
|---|---|
| QSKs D[1,n] | QSKs D[1,n] |

M-QSK-Übertragungen von N1 nach N3 über das Netz ohne die Nutzung von QKD-Verbindungen oder QSK gesicherten Verbindungen:

**Knoten**

| | | |
|---|---|---|
| N1 | N2 | N3 |

N1-------------------(QSKA ⊕ QSK B)-------------------> N3

M-QSK-Übertragungen von N2 nach N3 über das Netz ohne die Nutzung von QKD-Verbindungen oder QSK gesicherten Verbindungen:
N2 -------(QSK A ⊕ QSK C) ------ > N3

M- und D-QSK-Übertragungen von N1 nach N3 über eine weitere Verbindung außerhalb des Netzes, zum Beispiel DCN ohne die Nutzung von QKD-Verbindungen oder QSK gesicherten Verbindungen:
N1 • • • • • • (QSK B ⊕ QSK C ⊕ QSKs D[1,n])• • • • • • • • • • • • • • • • • • • •> N3

Optional wären weitere M- und D-QSK-Übertragungen von N1 nach N3 über weitere Verbindungen außerhalb des Netzes ohne die Nutzung von QKD-Verbindungen und Netzwerkverbindungen möglich, zum Beispiel FTP-Server, Data Center Applikationen, zeitlich unterschiedliche Übertragungen, etc. Dann würde sich die Anzahl der benötigten Initialisierungs-QSKs um je einen QSK mit zunehmenden weiteren Übertragungswegen oder Übertragungszeiten erhöhen.

Übertragene und generierte M- und D-QSKs, die im Knoten N3 vorliegen:
(QSK A ⊕ QSK B); (QSK A ⊕ QSK C); (QSK B ⊕ QSK C ⊕ QSKs D[1,n]).

Übertragene und generierte M- und D-QSKs, die im Knoten N3 auch unter Anwendung der assoziativen und kommutativen XOR Verknüpfungen vorliegen:
(QSK A ⊕ QSK B) (QSK A ⊕ QSK C) (QSK B ⊕ QSK C ⊕ QSKs D[1,n]);
(QSK A ⊕ QSK B) ⊕ (QSK A ⊕ QSK C) ⊕ (QSK B ⊕ QSK C ⊕ QSKs D[1,n]) = QSKs D[1,n]).

Damit liegen im allen drei Knoten N1, N2 und N3 die QSKs D[1,n] vor, die als M-QSKs oder D-QSKs für die weitere Encryption von D- und M-Verbindungen und Übertragungen genutzt werden können.

Die Prüfung auf einen Angriff zwischen den Knoten N1 und N3 über das Netz ergibt:
Der Angreifer könnte als Daten aus den von N1 nach N3 unidirektional über das Netz übertragenen Datenströmen (QSK A ⊕ QSK B) extrahieren. Damit ist ein erfolgreicher Angriff zur Extrahierung der QSKs D[1,n] nicht möglich.

Die Prüfung auf einen Angriff zwischen den Knoten N2 und N3 über das Netz ergibt:
Der Angreifer könnte als Daten aus den von N1 nach N3 unidirektional über das Netz übertragenen Datenströmen (QSK A ⊕ QSK C) extrahieren. Damit ist ein erfolgreicher Angriff zur Extrahierung von QSKs D[1,n] nicht möglich.

Die Prüfung auf einen Angriff zwischen den Knoten N1 und N3 über das DCN-Netz ergibt:
Der Angreifer könnte aus den von N1 nach N3 unidirektional über das externe DCN-Netz übertragenen Datenströmen (QSK B ⊕ QSK C ⊕ QSKs D[1,n]) extrahieren. Damit ist ein erfolgreicher Angriff zur Extrahierung von QSKs D[1,n] nicht möglich.

Die Prüfung auf einen Angriff zwischen den Knoten N1 und N3 über das Netz und auch N2 und N3 über das Netz und zusätzlich auch auf N1 und N3 über das externe DCN-Netz ergibt:
Der Angreifer könnte als Daten aus den von N1 nach N3 unidirektional über das Netz übertragenen Datenströmen (QSK A ⊕ QSK B) extrahieren. Aus den von N2 nach N3 unidirektional über das Netz übertragenen Datenströmen könnte der Angreifer Daten mit dem Ergebnis von (QSK A ⊕ QSK C) extrahieren und darüber hinaus Daten mit dem Ergebnis aus (QSK B ⊕ QSK C ⊕ QSKs D[1,n]) aus den von N1 nach N3 unidirektional über das DCN-Netz übertragenen Datenströmen. Damit wäre ein erfolgreicher Angriff zur Extrahierung der QSKs D[1,n] möglich mit:
(QSK A ⊕ QSK B) ⊕ (QSK A ⊕ QSK C) ⊕ (QSK B ⊕ QSK C ⊕ QSKs D[(1,n]) = QSKs D[1,n].

Für einen erfolgreichen Angriff wären aber folgende Umstände notwendig:
- An zwei verschiedenen disjunkten örtlichen Verbindungen, nämlich an den Verbindungen zwischen N1 und N3 sowie N2 und N3 müssten QSKs von einem Glasfaserkabel abgegriffen und korreliert werden.
- Vom DCN-Netz müssen QSKs abgegriffen und korreliert werden.
- Von zwei disjunkten optischen Verbindungen (bidirektional) sowie von einer oder optional auch weiteren Verbindungen müssen QSKs abgegriffen und korreliert werden.
- Von drei oder optional auch weiteren verschiedenen Signalen, die über verschiedene Verbindungen zu unterschiedlichen Zeiten übertragen werden müssen QSKs abgegriffen und korreliert werden
- Weitere Encryption Maßnahmen auf anderen Layern (Ethernet, IP, Applicationen, Management) müssen gehackt werden.
- Weitere Management-seitige Verfahren müssen gehackt und korreliert werden, zum Beispiel Übertragung von aktiven (gerade angewendeten) und passiven QSKs in denselben Datenpaketen, Entkopplung von zusammengehörigen QSKs, zum Beispiel uni- oder bidirektionale QSKs, die in verschiedenen optischen Wellenlängen Kanälen (DWDM, dense wavelength division multiplex) oder in verschiedenen zeitlichen Kanälen (TDM, Time Division Multiplex) übertragen werden, etc.

Darüber hinaus müssen auch bei dieser Verfahrensvariante für einen erfolgreichen, das Hacken von Verbindungen und übertragenen Daten mittels der entwendeten QSKs einschließenden Angriff die mehrfach angesprochenen, bereits zur 1. Verfahrensvariante im Einzelnen aufgeführten Bedingungen und Gegebenheiten erfüllt sein:
- Aus dem entwendeten Vorrat an QSKs muss der für die zugeordnete Verbindung (N1 - N3, oder N2 - N3, oder allgemein (Nx - Ny) angewendet werden, was im Netz durch das Key Management gesteuert wird.
- Der entsprechende QSKs ist nicht nur einer bestimmten Verbindung zugeordnet, sondern ist auch nur in einem bestimmten Zeitfenster einsetzbar, was durch das Key Management gesteuert wird.
- Der Angreifer muss auch die entsprechend zugeordnete Verbindung anzapfen, um räumlich, zeitlich und DWDM-technisch den Angriff durchführen zu können.
- Zusätzlich können für die unidirektionalen Verbindungen einer bidirektionalen Verbindung auch unterschiedliche QSKs zugeordnet werden, was durch das Key Management gesteuert wird.

Die QSKs D[1,n] können auch durch QRNGs (Quantum Random Number Generators) mit einer erheblich größeren QSK-Rate als das mit dem QKD-Verfahren möglich ist, erzeugt werden. Es können hierbei mehr als ein QRNG im Netz eingesetzt und vom Key Management gesteuert werden. Dadurch könnten genügend QSKs für die Bedarfe zur Verteilung in zum Beispiel in City-Netzen oder in Weitverkehrsnetzen und Verbindungen, etc. erzeugt werden.

Zur QSK-Übertragung von den Knoten N1 und N2 zum Knoten N3 sind über die zuvor erläuterten hinaus weitere Verfahrensvarianten möglich. Zum Beispiel könnte, ausgehend von den oben erläuterten Verfahrensvarianten 1 und 2, die Übertragung der QSKs D[1,n] durch weitere Verschachtelungen von generierten und übertragenen QSKs zu einer weiteren Erhöhung der Sicherheit führen. Möglich ist auch der Einsatz von weiteren QRNGs in beliebigen Netzwerkknoten, deren generierte QSKs durch das Key Management überwacht und gesteuert werden müssten.

Die erfindungsgemäße Lösung ermöglicht auch die sichere Verteilung von quantensicheren Schlüsseln (QSKs) in auf eine beliebe Zahl N von Netzwerknoten erweiterten Netzwerken, mit - im Extremfall - nur einer QKD-Verbindung. Insoweit waren die vorstehenden Darstellungen anhand eines drei Netzwerkknoten umfassenden Netzwerks zur Vereinfachung nur exemplarisch.

Insbesondere können unter Einsatz der Erfindung auch Glasfaserverbindungen zu Knoten mit größeren Entfernungen, beispielsweise mit Entfernungen von mehr als 50 km, mehr als 100 km, größer als 1000 km oder gar größer als 10.000 km, welche daher in jedem Falle OLAs (Optical Line Amplifier) enthalten mit quantensicheren Schlüsseln (QSKs) versorgt werden. Dies gilt obwohl das QKD-Verfahren nach dem jetzigem Stand der Technik nur für begrenzte Verbindungslängen bis zu ca. 100 km einsetzbar ist, da bei seiner Anwendung keine OLAs verwendet werden können, weil sie die notwendigen Quantenzustände zerstören würden.

Die Erfindung umfasst im Zusammenhang mit der sicheren Verteilung von QSKs auch die Erweiterung auf Verbindungen zu Netzwerkknoten über andere physikalische Medien und Anbindungen, zum Beispiel über Glasfaser, Kupfer, drahtlos, mm-Wellen, Tera-Hertz, optischen Freistrahl, Visible Light, etc.

Die Erfindung ist dabei sowohl für die sichere Verteilung von QSKs in bestehenden Netzen als auch in zukünftigen Netzen geeignet, so zum Beispiel für Access-Netze, City-Netze, Regional-Netze, Core-Netze und Weitverkehrsnetze und Verbindungen, Leitungsgebundene Netze (Glasfaser, Kupfer), drahtlose Netze (Funknetze, 60 GHz Netze, Tera-Hertz-Netze, Freistrahl-Netze, 3G, 4G, LTE, 5G, Hybride Netze (leitungsgebunden, drahtlos), Campus-Netze, Enterprise-Netze, Firmen-Netze, Business-Netze, In-House-Netze, etc.

Auch die sichere Verteilung von QSKs in Anwendung auf weitere Applikationsnetze, zum Beispiel Management Netze (zur Steuerung von Netzen), Netze für loT (Internet of Things), Visible Light Communication, etc. ist von der Erfindung umfasst.

Die Sicherheit des Verfahrens kann weiter erhöht werden, indem weitere Pfade von den QSKs generierenden Knoten, beispielsweise N1 oder N2 (in dem Netz gemäß Fig. 1), zu den mit QSKs zu versorgenden Knoten, beispielsweise N3, genutzt werden, so zum Beispiel auch verschiedene physikalische Medien oder Applikationen (LTE, Mobilfunk, e-mails, SMS, separates Netz Management System, DCN Data Communication Network, etc.).

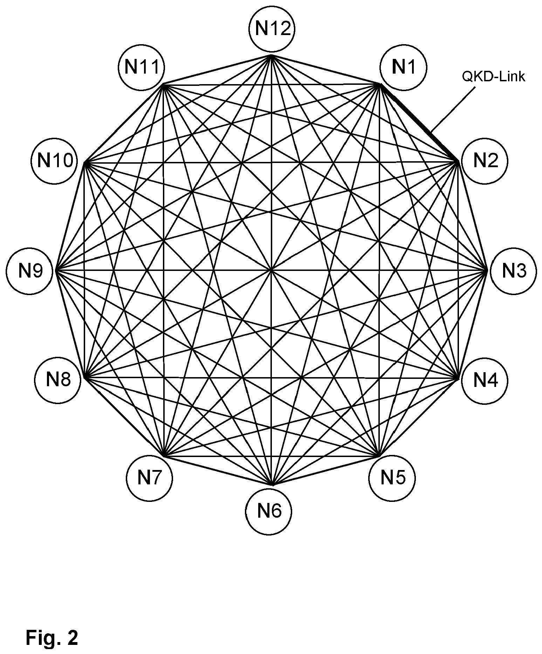

Wie beispielhaft in der Fig. 2 gezeigt, können mittels der Erfindung in Netzen mit N Knoten (hier zum Beispiel N = 12) alle N Knoten mit QSKs versorgt werden, obwohl nur zwischen den Knoten N1 und N2 eine QKD-Verbindungen - durch kräftigere Strichstärke symbolisiert - besteht, so dass die Knoten N1 und N2 einen QKD-Verbund bilden. Die anderen Verbindungen, das heißt die Verbindungen außer der zwischen N1 und N2, können insbesondere auch OLAs enthalten. Die Linien zwischen den Knoten stellen dabei die einzelnen optischen Verbindungen einer Vollvermaschung zwischen den N Knoten des gezeigten Netzwerks dar. Die optischen Verbindungen können hierbei auch mehrere DWDM-Kanäle eines DWDM-Systems tragen. Jeder DWDM-D-Kanal kann mit Hilfe der Erfindung durch D-QSKs encrypted (verschlüsselt) werden.

Zusätzlich sind noch alle M-Verbindungen im Netz mit M-QSKs zu sichern. Damit sind viele QSKs im Netz notwendig, wodurch der zusätzliche Einsatz von QRNGs sinnvoll ist, um genügend QSKs pro Zeiteinheit erzeugen und verteilen zu können. Jeder Knoten ist im Netz über mindestens zwei disjunkte Verbindungen angeschlossen .

Die Inbetriebnahme des Netzes wurde in drei Phasen bereits oben beschrieben. Insbesondere ist auch das Netzmanagement des Netzes mit entsprechenden M-QSKs zu sichern. Über diese mit M-QSK gesicherten (beispielsweise) M-Verbindungen können somit weitere M-QSKs und D-QSKs verteilt werden. Sind alle Netzwerkknoten mit einer ausreichenden Anzahl von M-QSKs und D-QSKs versorgt, wird das Netz in den Arbeitszustand versetzt und die QSK-gesicherten, das heißt quantengesicherten M- und D-Übertragungen können gestartet werden.

Die aktiven, das heißt die gerade angewendeten M-QSKs und D-QSKs sollen nach einer festzulegenden Zeit durch neue QSKs ausgetauscht werden. Dazu ist ein ebenfalls festzulegender Vorrat an QSKs in den einzelnen Knoten notwendig, was ebenfalls durch das Key Management gesteuert werden muss. Im Falle eines Angriffs kann das Netz Management entsprechende Aktionen einleiten, bis hin zum geordneten sicheren Neustart des Netzes.

Um hochkapazitive, skalierbare und kosteneffiziente Architekturen und Funktionalitäten von QSKs gesicherten Netzen bereitstellen zu können, werden die nachfolgenden Abschätzungen durchgeführt.

Im Glasfasernetz sind im erweiterten optischen C-Band mit 4.800 GHz Bandbreite zum Beispiel folgende Parameter Stand der Technik:
- 4.800 GHz Bandbreite im erweiterten C-Band, welches durch Erbium Doped Fiber Amplifiers (EDFA) verstärkt werden kann,
- 50 GHz Kanalbandbreite für ein 100 Gbit/s Signal, Übertragungskapazität pro Kanal,
- 96 optische DWDM Kanäle à 100 Gbit/s Datenrate über eine optische Glasfaser,
- 9,6 Tbit/s für 96 Kanäle à 100 Gbit/s Übertragungskapazität pro Glasfaser im DWDM System.

Für QRNGs sind folgende Parameter Stand der Technik:
- 16 Mbit/s QRNG Erzeugungsrate, IdQuantique - Quantis Appliance 16M,
- die QRNG Erzeugungsrate ergibt sich pro Gerät in Abhängigkeit von der QSK Länge L zu 2 ^24/L

| | | | |
|---|---|---|---|
| 65.536 QSKs/s | für | 256 Bit | QSKs (L = 2 ^8) |
| 32.768 QSKs/s | für | 512 Bit | QSKs (L = 2 ^9) |
| 16.384 QSKs/s | für | 1024 Bit | QSKs (L = 2 ^10) |
| 8.192 QSKs/s | für | 2048 Bit | QSKs (L = 2 ^11) |
| 4.096 QSKs/s | für | 4096 Bit | QSKs (L = 2 ^12). |

In einem vollvermaschten Netz mit N Knoten, 50 GHz DWDM-Kanal-Bandbreite, 100 Gbit/s Übertragungskapazität pro Kanal ergeben sich:

| | | |
|---|---|---|
| - N Knoten | Zahl der Knoten im Netz N = 12 | |
| - (N-2)*4+1 M-QSK (Initialisierungs-phase) | Zahl der notwendigen M-QSK in der Initialisierungspha-se, die für die Übertragung über die disjunkten unidirek-tionalen Verbindungen von den Knoten des QKD-Verbundes zu den restlichen Netzwerkknoten, die nicht dem QKD-Verbund angehören, übertragen werden müssen, zuzüglich eines zwischen den beiden Knoten des QKD-Verbundes genutzten QSK. Dabei sind 4 QSK pro Netzwerkknoten, die nicht dem QKD-Verbund angehören, sowie ein QSK zwischen den beiden Knoten des QKD-Verbundes notwendig. | |
| | N = 12: | |
| | Es gibt (N-2)*4+1 = 41 M-QSK im Netz für die Initialisierungsphase | |
| - (N-1) (Arbeitsphase) | Zahl der notwendigen M-QSK zur Encryption von M-Ver bindungen in der Arbeitsphase von einem Knoten des Netze, zum Beispiel einem Knoten des QKD-Verbundes | |
| | oder einem Knoten der ein QRNG enthält, zu allen anderen Knoten des Netzes. | |
| | N=12 | |
| | Es werden (N-1)=1 1 M-QSK während der Arbeitsphase pro Schlüsselübertragung von einem Netzwerkknoten zu allen anderen Netzwerkknoten benötigt | |
| - N * (N - 1) / 2 D-Verbindungen | bidirektionale D-Verbindungen (1x Vollvermaschung) N = 12: | |
| | Es gibt 66 bidirektionale Verbindungen in einem vollvermaschten Teilnetz | |
| - 100Gbit/s*N*(N-1)/2 | bidirektionale D-Kapazität im Netz (1x Vollvermaschung, 100Gbit/s) | |
| D-Kapazität | N = 12: | |
| | Die bidirektionale D-Netzkapazität beträgt 6,6 Tbit/s für ein vollvermaschtes Teilnetz | |
| - N*(N-1) D-Verbindungen | unidirektionale D-Verbindungen (1x Vollvermaschung) N = 12: | |
| | Es gibt 132 unidirektionale D-Verbindungen im vollvermaschten Teilnetz | |
| - N*(N-1) | D-QSKs auf jeweils beiden Seiten der unidirektionalen Verbindungen | |
| D-QSKs | (1 x Vollvermaschung) | |
| | N = 12: Es werden 132 D-QSKs auf jeweils beiden Seiten der D-Verbindungen benötigt | |
| - W=N | Zahl der benötigten Wellenlängen W für 1x Vollvermaschung im DWDM System für das optische C-Band, | |
| Wellenlängen | Es werden W=N Wellenlängen benötigt | |
| | N = 12: | |
| | Zahl der benötigten Wellenlängen für 1x Vollvermaschung beträgt W = 12 | |
| - 96/N | Zahl der möglichen vollvermaschten Teilnetze, DWDM System, C-Band | |
| Teilnetze | N = 12: Es sind 8 vollvermaschte Teilnetze möglich | |
| - 100Gbit/s*96*(N-1 )/2 | bidirektionale D-Kapazität im Netz (96/N Vollvermaschung, 100 Gbit/s) | |
| D-Kapazität | N = 12, | |
| | Die bidirektionale D-Netzkapazität beträgt 52,8 Tbit/s für maximal 8 vollvermaschte Teilnetze | |
| 96*(N-1) | unidirektionale D-Verbindungen (8x Vollvermaschung) im voll ausgebautem Netz | |
| D-Verbindungen | N = 12: | |
| | Die Zahl der unidirektionale D-Verbindungen beträgt 1.056 für 8 vollvermaschte Teilnetze | |
| - 96*(N-1) | D-QSKs auf beiden Seiten der unidirektionalen Verbindungen (8x Vollvermaschung) | |
| D-QSKs | N = 12: | |
| | Die Zahl der benötigten D-QSKs für 8x vollvermaschte Teilnetze beträgt 1.056 D-QSKs, die auf beiden Seiten der D-Verbindungen notwendig sind | |
| - (((N-1)+96*(N-1))*L)/(2^24) M-und D-QSK-Zeit | Zeit für die Erzeugung eines kompletten M- und D-QSK Satzes für alle Knoten und Verbindungen im Netz während der Arbeitsphase bei Verwendung eines QRNG mit einer QSK-Erzeugungsrate von 16 Mbit/s (2^24 Bit/s). | |
| | (8x Vollvermaschung) | |
| | N = 12: ca. 16,3 ms | für L=256 Bit QSK Länge |
| | N = 12: ca. 32,6 ms | für L=512 Bit QSK Länge |
| | N = 12: ca. 65,1 ms | für L=1024 Bit QSK Länge |
| | N = 12: ca. 130,2 ms | für L=2048 Bit QSK Länge |
| | N = 12: ca. 260,5 ms | für L=4096 Bit QSK Länge |
| - (2^24)/(96*(N-1)+(N-1))*L M- und D-QSK Rate | bei Verwendung eines QRNG mit einer QSK-Erzeugungsrate von 16 MBit/s. | |
| | (8x Vollvermaschung) | |
| | N = 12: ca. 61,4 komplette QSK sets pro Sekunde für L=256 Bit QSKs | |
| | N = 12: ca. 30,7 komplette QSK sets pro Sekunde für L=512 Bit QSKs | |
| | N = 12: ca. 15,4 komplette QSK sets pro Sekunde für L=1024 Bit QSKs | |
| | N = 12: ca. 7,7 komplette QSK sets pro Sekunde für L=2048 Bit QSKs | |
| | N = 12: ca. 3,8 komplette QSK sets pro Sekunde für L=4096 Bit QSKs | |

Für die Initialisierungsphase des Netzes mit N Knoten ergeben sich:

| | |
|---|---|
| - 1*QKD-Verbindung | 1* QKD-Verbindung zur M-QSK-Erzeugung und Anwendung zwischen den Knoten N1 und N2 gemäß 3. Verfahrensvariante |
| - QSKs | Erzeugung von QSKs durch einen (oder mehrere) QRNGs, mit einer QRNG Generationsrate von 16 Mbit/s, die dem Key Management zugeführt werden, Bereitstellung von M- und D-QSKs durch das Key Management für die Encryption von M- und D-Verbindungen |
| - 4*(N-2)+1 M-QSKs | Zahl der M-QSKs für unidirektionalen M-Verbindungen im Netz, die von den beiden Knoten des QKD-Verbundes über disjunkte Verbindungen zu allen anderen N-2 Knoten im Netz, die nicht dem QKD-Verbund angehören, übertragen und verteilt werden, zuzüglich eines von den beiden, dem QKD-Verbund angehörenden Knoten gemeinsam verwendeten M-QSK, um M-QSK gesicherte M-Verbindungen bereitzustellen, über die weitere Management-Daten und -Informationen, zum Beispiel auch weitere M- und D-QSKs übertragen werden können N = 12: M-QSKs = 4*(N-2)+1 = 41. Es werden 41 M-QSKs für die Initialisierungsphase benötigt |
| -96*(N-1) D-QSKs | Zahl der D-QSKs für alle unidirektionale Verbindungen (8x Vollvermaschung) unter der Regie des Key Managements, die notwendige Zahl der unidirektionalen D-QSKs wird an die jeweiligen Netzwerkknoten über die M-Verbindungen übertragen bzw. verteilt, In den Knoten werden die jeweiligen D-Verbindungen durch die vom Key Management zugeordneten D-QSKs gesichert |

Für die Arbeitsphase des Netzes mit N Knoten ergeben sich:

| | | |
|---|---|---|
| - N | Zahl der M-QSKs für die unidirektionalen M-Verbindungen im Netz, die für die Arbeitsphase für eine M-QSK-Zeit Periode benötigt werden, gesteuert durch das Key Management | |
| - 96*(N-1) | Zahl der D-QSKs für unidirektionale D-Verbindungen | |
| D-QSKs | (8x Vollvermaschung) zur Sicherung aller D-Verbindungen im Netz, das Key Management steuert alle Vorgänge bezüglich der D-QSKs | |
| | die D-QSKs werden vom QRNG erzeugt, die D-QSKs werden dem Key Management übergeben, das Key Management veranlasst die Übertragung der D-QSKs über die M-QSK gesicherten M-Verbindungen an die entsprechenden Knoten im Netz | |
| - (96*(N-1)+(N-1))*L/(2^24) M- und D-QSK | Minimale Zeit für die komplette M- und D-QSK-Erzeugung im Netz, bei Verwendung eines QRNG mit einer QSK-Erzeugungsrate von 16 MBit/s. | |
| | (8x Vollvermaschung) | |
| | N = 12: ca. 16,3 ms für L=256 Bit QSK Länge | |
| | N = 12: ca. 32,6 ms | für L=512 Bit QSK Länge |
| | N = 12: ca. 65,1 ms | für L=1024 Bit QSK Länge |
| | N = 12: ca. 130,2 ms | für L=2048 Bit QSK Länge |
| | N = 12: ca. 260,5 ms | für L=4096 Bit QSK Länge |
| - (2^24)/(96*(N-1)+(N-1))*L M- u. D-QSK Rate | Maximale komplette M- und D-QSK-Erzeugungsrate im | |
| | Netz, bei Verwendung eines QRNG mit einer QSK-Erzeugungsrate von 16 MBit/s. | |
| | (8x Vollvermaschung) | |
| | N = 12: ca. 61,4 komplette QSK sets pro Sekunde für L=256 Bit QSKs | |
| | N = 12: ca. 30,7 komplette QSK sets pro Sekunde für L=512 Bit QSKs | |
| | N = 12: ca. 15,4 komplette QSK sets pro Sekunde für L=1024 Bit QSKs | |
| | N = 12: ca. 7,7 komplette QSK sets pro Sekunde für L=2048 Bit QSKs N = 12: ca. 3,8 komplette QSK sets pro Sekunde für L=4096 Bit QSKs | |
| - QSK-Zeit | Festlegung der QSK-Zeit, die ein QSK Satz (M- und D-QSKs) im Netz aktiv ist und dann ausgetauscht werden muss, diese Zeit muss größer sein als die minimale Zeit für die komplette QSK-Erzeugung im Netz (8x Vollvermaschung) Für N=12 beträgt die minimale Zeit für die Erzeugung von D-QSKs für einen QRNG mit einer Erzeugungszeit von 16 Mbit/s ca. 65,2 ms für eine QSK-Bit-Länge von L=1024 Bit damit kann die QSK Anwendungszeit bis herunter in den Sekundenbereich gewählt werden, wobei zusätzlich die Übertragungszeiten zu den einzelnen Knoten im Netz sowie die Verarbeitungszeiten des Key Managements zu berücksichtigen sind. | |

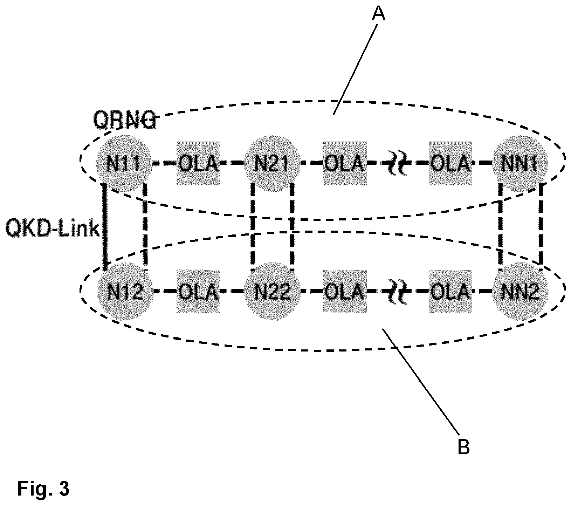

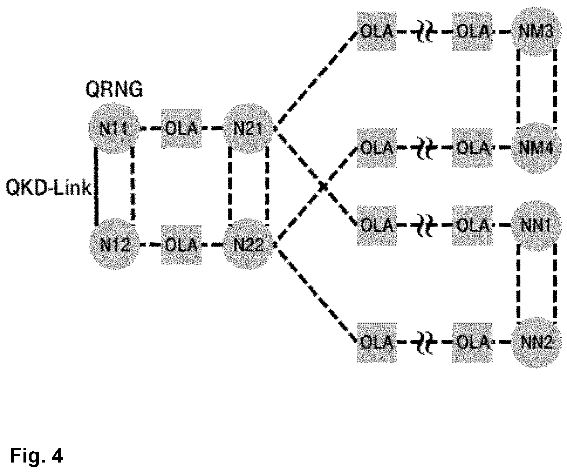

Anhand der Fig. 3 und 4 sollen Aspekte des Verfahrens des Verfahrens nochmals am Beispiel zweier Ausbildungsformen eines Weitverkehrsnetzes dargestellt werden.

Mittels des Verfahrens können nach Fig. 3 alle NN1, NN2 Knoten einer Weitverkehrsverbindung mit QSKs versorgt werden, obwohl nur zwischen den Knoten N11 und N12 einer QKD-Verbindung besteht, die keinen OLA (Optical Line Amplifier) enthalten darf, da das anderenfalls das Generieren von Schlüsseln nach dem QKD Verfahren ausschließen würde.

In einigen bereits existierenden Netzen, so auch in Netzen der Anmelderin sind Kernnetze durch zwei parallel verlaufende redundante A- und B-Netze aufgebaut, um im Fehlerfall notwendige D-Verbindungen aufrechterhalten zu können. Das A-Netz bzw. das B-Netz sind durch die Knoten N11, N21, ..., NN1 beziehungsweise N12, N22, ..., NN2 dargestellt. Zwischen den jeweiligen Knoten Nx1 und Nx2 sind ebenfalls zwei D-Verbindungen geschaltet, um im Fehlerfall die zu schützenden D-Verbindungen vom A-Netz zum B- Netz oder umgekehrt umschalten zu können. Alle D-Verbindungen zwischen den Knoten des Netzes können jeweils 96 DWDM Kanäle mit je 100 Gbit/s Signalen tragen, die für jede Strecke zwischen den Knoten mit QSKs zu sichern sind.

Die Linien zwischen den Netzwerkknoten stellen dabei die einzelnen optischen D-Verbindungen in den Weitverkehrsnetzen und zwischen den Netzwerkknoten dar. Insbesondere können die anderen D-Verbindungen, also alle D-Verbindungen mit Ausnahme der D-Verbindungen zwischen N11 und N12, auch OLAs enthalten, da hier keine QKD-Verbindungen vorliegen. Die optischen Verbindungen können dabei zum Beispiel auch DWDM-Kanäle eines DWDM-Systems oder auch andere Signale tragen. Jeder DWDM D-Kanal kann dabei durch D-QSKs verschlüsselt werden. Zusätzlich sollen die Ende-zu-Ende D-Verbindungen in den Interim-Knoten über Transponder umgesetzt werden, um ein Routing im IP Layer durchführen zu können. Damit sind viele QSKs in Weitverkehrsnetzen und Verbindungen notwendig, wodurch der zusätzliche Einsatz von QRNGs sinnvoll ist, um genügend QSKs erzeugen und verteilen zu können. Jeder Netzwerkknoten ist in dem gezeigten Weitverkehrsnetz über mindestens zwei Verbindungen angeschlossen.

Zusätzlich sind noch alle M-Verbindungen in dem Weitverkehrsnetz mit M-QSKs zu sichern. Insbesondere sind in dem Weitverkehrsnetz, wie auch in anderen Weitverkehrsnetzen, auch OLAs in die D-Verbindungen zwischen den Netzwercknoten eingebaut. Außerdem werden OSC-Kanäle (OSC = Optical Supervisory Channel) für die Steuerung des Weitverkehrsnetzes zwischen allen Netzelementen des Weitverkehrsnetzes benutzt, die zum Beispiel auch für die QSK M-Übertragungen genutzt werden können. Diese müssen daher auch mit M-QSKs gesichert werden. Das heißt, zwischen allen Netzelementen des Weitverkehrsnetzes wird stets eine genügend große Zahl von QSKs benötigt, um einen sicheren Betrieb gewährleisten zu können. Darüber hinaus werden noch die M-QSKs, die die M-Verbindungen schützen, nach einer festzulegenden Zeit ausgetauscht. Dafür ist ein Key Management notwendig, das alle Belange bezüglich der QSK steuert und koordiniert.

Bei dem in der Fig. 4 gezeigten Weitverkehrsnetz, respektive Netzwerk, sind zwei Weitverkehrsverbindungen dargestellt, die beide an den Knoten N11 und N12 starten, aber an unterschiedlichen Knoten NN1 und NN2 beziehungsweise NM3 und NM4 enden. Hier können beide Weitverkehrsnetze und Verbindungen mit QSKs gesichert werden.

Zunächst werden in einer Weitverkehrsverbindung für die Initialisierung über die QKD-Verbindung zwischen den Knoten N11 und N12 M-QSKs und D-QSKs erzeugt. Über ein Key Management werden diese QSKs gemäß den zur Fig. 1 in Bezug auf ein Netzwerk mit drei Netzwerkknoten erläuterten Abläufen für die QSK-Verteilung auf die restlichen Knoten im Netz verteilt. Dabei können auch andere Knoten außer N11 und N12, die bereits QSKs erhalten haben, diese für die weitere Verteilung in den Weitverkehrsverbindungen auf andere Knoten, entsprechend diesen Abläufen, nutzen.

Insbesondere ist auch das Netzmanagement des Netzes mit entsprechenden M-QSKs zu sichern. Über diese M-QSK gesicherten M-Verbindungen können im Betrieb weitere M-QSKs und D-QSKs verteilt werden. Danach wird das Netz in den Arbeitszustand versetzt und die QSK sicheren M- und D-Übertragungen können genutzt werden. Im Falle eines Angriffs kann das Netz Management entsprechende Aktionen einleiten, bis hin zum geordneten sicheren Neustart des Weitverkehrsnetzes und aller Verbindungen.

Um hochkapazitive, skalierbare und kosteneffiziente Architekturen und Funktionalitäten von QSK gesicherten Weitverkehrsnetzen und Verbindungen bereitstellen zu können, werden folgende Abschätzungen durchgeführt.

In Weitverkehrsnetzen und Verbindungen sind im erweiterten optischen C-Band mit 4.800 GHz Bandbreite zum Beispiel folgende Parameter Stand der Technik:
- 4.800 GHz Bandbreite im erweiterten C-Band, das durch Erbium Doped Fiber Amplifiers (EDFA) verstärkt werden kann.
- 50 GHz Kanalbandbreite für ein 100 Gbit/s Signal, Übertragungskapazität pro Kanal.
- 96 optische DWDM Kanäle à 100 Gbit/s Datenrate über eine optische Glasfaser.
- 9,6 Tbit/s für 96 Kanäle à 100 Gbit/s Übertragungskapazität pro Glasfaser im DWDM System.

Für QRNGs sind folgende Parameter Stand der Technik:
- 16 Mbit/s QRNG Erzeugungsrate, IdQuantique - Quantis Appliance 16M
- Die QRNG Erzeugungsrate ergibt sich pro Gerät in Abhängigkeit von der QSK Länge L zu (2^24)/L

| | | | |
|---|---|---|---|
| 65.536 QSKs/s | für | 256 Bit QSKs | (L = 2 ^8) |
| 32.768 QSKs/s | für | 512 Bit QSKs | (L = 2 ^9) |
| 16.384 QSKs/s | für | 1024 Bit QSKs | (L = 2 ^10) |
| 8.192 QSKs/s | für | 2048 Bit QSKs | (L = 2 ^11) |
| 4.096 QSKs/s | für | 4096 Bit QSKs | (L = 2 ^12) |

In einer Weitverkehrsverbindung nach Fig. 3 mit N A-Knoten und N B-Knoten werden redundante Verbindungen mit zweifach Anbindungen mit DWDM-Systemen, die im optischen C-Band eine Bandbreite von 4.800 GHz besitzen, bereitgestellt. Es werden 50 GHz Kanalbandbreiten, 100 Gbit/s Übertragungskapazität pro Kanal, Ende-zu-Ende D-Verbindungen sowie D- und M-Verbindungen zwischen allen Knoten angenommen. Damit ergeben sich:

| | |
|---|---|
| - N | Zahl der A-Knoten in der Weitverkehrsverbindung, |
| A-Knoten | redundanter Aufbau der Weitverkehrsverbindung 2 End und 8 Interim Knoten, beispielsweise N = 10: |
| - N | Zahl der B-Knoten in der Weitverkehrsverbindung, redundanter Aufbau der Weitverkehrsverbindung 2 End und 8 Interim Knoten, beispielsweise N = 10: |
| B-Knoten | |
| - 2*N | Zahl der Knoten in der Weitverkehrsverbindung |
| A+B Knoten | N = 10: |
| | Es gibt 20 Knoten in der redundanten Weitverkehrsverbindung |
| - O A-OLA | Zahl der A-OLAs in der Weitverkehrsverbindung, redundanter Aufbau der Weitverkehrsverbindung |
| | O = 18: (2 OLAs zwischen 2 A-Knoten auf der Strecke) |
| - O B-OLA | Zahl der B-OLAs in der Weitverkehrsverbindung, redundanter Aufbau der Weitverkehrsverbindung |
| | O = 18: (2 OLAs zwischen 2 A-Knoten auf der Strecke) |
| - 2*O | Zahl der aller OLAs (A-OLAs + B-OLAs) in der Weitver-kehrsverbindung, redundanter Aufbau der Weitverkehrsverbindung |
| A+B OLAs | |
| | Es gibt 36 OLAs in der redundanten Weitverkehrsverbindung |
| - 2*(N-1+O) | Zahl der M-Transponder zwischen Netzelementen im |
| M-Transponder | A-Netz |
| | N=10, O=18: |
| | Es gibt 54 M-Transponder im A-Netz |
| - 2*(N-1+O) M-Transponder | Zahl der M-Transponder zwischen Netzelementen im B-Netz |
| | N=10, O=18: |
| | Es gibt 54 M-Transponder im B-Netz |
| - 2*2*N | Zahl der M-Transponder zwischen Netzelementen des A-B-Netzes |
| M-Transponder | |
| | N = 10: |
| | Es gibt 40 M-Transponder für die Verbindung des A-B-Netzes |
| - 4*(2*N-1+O) | Zahl aller M-Transponder im gesamten Netz |
| M-Transponder | N = 10, O = 18: |
| | Es sind 148 M-Transponder im gesamten Netz notwendig |
| - 4*(2*N-1+O) | Zahl der M-QSKs für M-Transponder für unidirektionale M-Verbindungen im gesamten Netz |
| M-QSKs | |
| | N=10, O=18: |
| | Es sind 148 M-QSKs im gesamten Netz für eine zeitliche QSK Periode für die Management Transponder zu erzeugen und zu verteilen |
| - 96*2*(N-1) | Zahl der DWDM D-Transponder im A-Netz |
| D-Transponder | N = 10: |
| | Es gibt maximal 1.728 DWDM D-Transponder im A-Netz |
| - 96*2*(N-1) | Zahl der DWDM D-Transponder im B-Netz |
| D-Transponder | N = 10: |
| | Es gibt maximal 1.728 DWDM D-Transponder im B-Netz |
| - 96*2*N*2 D-Transponder | Zahl der DWDM D-Transponder zwischen Netzelemen-ten des A-B Netzes N = 10: |
| | Es gibt maximal 3.840 DWDM D-Transponder bezüglich des A-B Netzes |
| - 96*4*(2*N-1) | Zahl aller DWDM D-Transponder im gesamten Netz |
| D-Transponder | N = 10: |
| | Es gibt maximal 7.296 DWDM D-Transponder im gesamten Netz |
| - 96*4*(2*N-1) | Zahl der D-QSKs für die DWDM D-Transponder für unidi-rektionale DWDM D-Verbindungen im gesamten Netz |
| D-QSKs | |
| | N = 10: |
| | Es sind maximal 7.296 D-QSKs im gesamten Netz für eine zeitliche QSKs Periode für die unidirektionalen DWDM D-Verbindungen mit D-Transponder zu erzeugen und zu verteilen |
| - 4*(97*(2*N-1)+O) | Zahl der gesamten M-QSKs und D-QSKs für unidirektio-nale M- und D-Verbindungen im gesamten Netz |
| M- und D-QSKs | |
| | N=10, O=18: |
| | Es sind 7.444 M- und D-QSKs für alle unidirektionalen M-und D-Verbindungen im gesamten Netz notwendig |
| - (4*(97*(2*N-1)+O))*L/(2^24) | |
| QSK-Zeit | Zeit für eine komplette QSK-Erzeugung (M-QSKs und D-QSKs) im Netz |
| | N = 10: ca. 113,6 ms für L=256 Bit QSK Länge |
| | N = 10: ca. 227,2 ms für L=512 Bit QSK Länge |
| | N = 10: ca. 454,3 ms für L=1024 Bit QSK Länge |
| | N = 10: ca. 908,7 ms für L=2048 Bit QSK Länge |
| | N = 10: ca. 1.817,4 ms für L=4096 Bit QSK Länge |
| - 2 ^24/(4*(97*(2*N-1)+O)*L) | |
| QSK Rate | Komplette QSK-Erzeugungsrate im Netz (M-QSKs und D-QSKs) |
| | |
| | N = 10: ca. 8,8 komplette QSK Sets pro Sekunde für L=256 Bit QSKs |
| | N = 10: ca. 4,4 komplette QSK Sets pro Sekunde für L=512 Bit QSKs |
| | N = 10: ca. 2,2 komplette QSK Sets pro Sekunde für L=1024 Bit QSKs |
| | N = 10: ca. 1,1 komplette QSK Sets pro Sekunde für L=2048 Bit QSKs |
| | N = 10: ca. 0,6 komplette QSK Sets pro Sekunde für L=4096 Bit QSKs |

Für die Initialisierungsphase des Weitverkehrsnetzes mit N Knoten und O OLAs ergeben sich:

| | |
|---|---|
| - 1*QKD-Verbindung | 1* QKD-Verbindung zur M-QSKs Erzeugung und Anwendung zwischen den Knoten N11 und N12 gemäß 3. Verfahrensvariante |
| - QSKs | Erzeugung von QSKs durch einen (oder mehrere) QRNGs, mit einer QRNG Generationsrate von 16 Mbit/s, die dem Key Management zugeführt werden, Bereitstellung von M- und D-QSKs durch das Key Management für die Encryption von M- und D-Verbindungen |
| - 4*4*(2*N-1+O) M-QSKs | Zahl M-QSKs für unidirektionalen M-Verbindungen im Netz, die vom Knoten mit dem QRNG gemäß 3. Verfahrensvariante zu allen anderen Knoten im Netz übertragen und verteilt werden, um M-QSK gesicherte M-Verbindungen bereitzustellen, über die weitere M- und D-QSKs und sonstige Informationen übertragen werden |
| - 96*4*(2*N-1) D-QSKs | Zahl der D-QSKs für alle unidirektionale D- Verbindun-gen unter der Regie des Key Managements, die notwendige Zahl der unidirektionalen D-QSKs wird an die jewei- |
| ligen Netzwerkknoten über die M-Verbindungen übertragen bzw. verteilt, In den Knoten werden die jeweiligen D-Verbindungen durch die vom Key Management zugeordneten D-QSKs gesichert | |

Für die Arbeitsphase des Weitverkehrsnetzes mit N Knoten und O OLAs ergeben sich:

| | |
|---|---|
| - 4*(2*N-1+O) | Zahl der M-QSKs für unidirektionale M-Verbindungen zur Sicherung aller M-Verbindungen im Netz, das Key Management steuert alle Vorgänge bezüglich der QSKs die M-QSKs werden vom QRNG erzeugt, die M-QSKs werden dem Key Management übergeben, das Key Management veranlasst die Übertragung der M-QSKs über die M-QSK gesicherten M-Verbindungen an die entsprechenden Knoten im Netz |
| M-QSKs | |
| - 96*4*(2*N-1) | Zahl der D-QSKs für unidirektionale D- Verbindungen zur Sicherung aller D-Verbindungen im Netz, das Key Management steuert alle Vorgänge bezüglich der D-QSKs die D-QSKs werden vom QRNG erzeugt, die D-QSKs werden dem Key Management übergeben, das Key Management veranlasst die Übertragung der D-QSKs über die M-QSK gesicherten M-Verbindungen an die entsprechenden Knoten im Netz |
| D-QSKs | |
| - (4*(97*(2*N-1 )+O))*L/(2^24) | |
| QKD-Zeit | Minimale Zeit für die komplette M-QSK und D-QSK-Erzeugung im Netz |
| | N=10, O=18: ~113,6 ms für L=256 Bit QSK Länge |
| | N=10, O=18: ~227,2 ms für L=512 Bit QSK Länge |
| | N=10, O=18: ~454,3 ms für L=1024 Bit QSK Länge |
| | N=10, O=18: ~908,7 ms für L=2048 Bit QSK Länge |
| | N=10, O=18: ~1.817,4 ms für L=4096 Bit QSK Länge |
| - (2^24)/(4*(97*(2*N-1 | |
| QKD-Rate | Maximale komplette M-QSK und D-QSK-Erzeugungsrateim Netz bei der Nutzung eines QRKG mit 16 Mbit/s Ge-nerationsrate |
| )+O)L+ N=10, O=18: ~8,8 komplette QSK Sets pro Sekunde für L=256 Bit QSKs | |
| N=10, O=18: ~4,4 komplette QSK Sets pro Sekunde für L=512 Bit QSKs | |
| N=10, O=18: ~2,2 komplette QSK Sets pro Sekunde für L=1024 Bit QSKs | |
| N=10, O=18: ~1,1 komplette QSK Sets pro Sekunde für L=2048 Bit QSKs | |
| N=10, O=18: ~0,6 komplette QSK Sets pro Sekunde für L=4096 Bit QSKs | |
| - QSK-Zeit | Festlegung der QSK-Zeit, die ein QSK Satz (M-QSKs und D-QSKs) im Netz aktiv ist und dann ausgetauscht werden muss. Diese Zeit muss größer sein als die minimale Zeit für die komplette QSK-Erzeugung im Netz. Für N=10 und O = 18 beträgt die minimale Zeit für die Erzeugung der QSKs für einen QRNG mit einer Erzeugungszeit von 16 Mbit/s ca. 454,3 ms für eine QSK Bit Länge von L=1024 Bit. Damit kann die QSK-Anwendungszeit bis herunter in den Sekundenbereich gewählt werden, wobei zusätzlich die Übertragungszeiten zu den einzelnen Knoten im Netz sowie die Verarbeitungszeiten des Key Managements zu berücksichtigen sind. Werden anstelle von unidirektionalen Verbindungen bidirektionale M- und D-Verbindungen betrachtet, wobei beide unidirektionalen Verbindungen der entsprechenden bidirektionalen Verbindung jeweils denselben QSK benutzen (M-QSK und D-QSK), dann verringert sich die Zahl der zu erzeugenden QSK im Netz um ca. die Hälfte. |
| Damit sinkt auch die Zeit, die für die Erzeugung eines kompletten Schlüsselsatzes (M-QSK und D-QSK) benötigt wird, auf ca. die Hälfte der Generationszeit, bzw. die Schlüsselerzeugungsrate verdoppelt sich. | |

## Patentansprüche

1. Verfahren zur Verteilung und Nutzung quantensicherer kryptographischer Schlüssel, das heißt von QSKs, in einem Kommunikationsnetzwerk, nämlich in einem Netzwerk mit mindestens drei Netzwerkknoten, wobei in dem Netzwerk mindestens zwei, einen QKD-Verbund bildende Netzwerkknoten über eine QKD-Verbindung miteinander verbunden sind, nämlich über eine Quantum Key Distribution Verbindung für eine unter Nutzung quantenmechanischer Effekte erfolgende Erzeugung und Verwendung gemeinsamer QSKs zur Sicherung von Verbindungen und zur verschlüsselten Datenübertragung, und wobei mindestens ein Netzwerkknoten des Netzwerks ein nicht-QKD-gestützter Knoten, das heißt ein nicht zu einem QKD-Verbund gehörender Netzwerkknoten ist, **dadurch gekennzeichnet, dass** zu allen nicht-QKD-gestützten Knoten, welche nicht bereits über zwei disjunkte Netzwerkpfade mit einem QKD-Verbund verbunden sind, eine solche vollständig disjunkte Verbindung geschaffen wird und dass durch einen QKD-Verbund eine Anzahl erster QSKs generiert wird, mittels derer durch wiederholte XOR-Verknüpfung einzelner dieser QSKs untereinander sowie mit jeweils einem von einer Mehrzahl weiterer von diesem QKD-Verbund generierter QSKs D[1,n] nacheinander einzelne der QSKs D[1,n] an nicht-QKD-gestützte Knoten zum Aufbau quantengesicherter Verbindungen mit anderen Netzwerkknoten und zur verschlüsselten Datenübertragung über unterschiedliche Netzwerkpfade ihrer disjunkten Verbindung mit dem QKD-Verbund verteilt werden, wobei die Generierung und Verteilung der QSKs gesteuert durch ein zentrales Key Management in Zusammenarbeit mit einem an jedem Netzwerkknoten vorhandenen lokalen Key Management erfolgt.

2. Verfahren nach Anspruch 1, **dadurch gekennzeichnet, dass** durch den QKD-Verbund ein erster QSK (A), ein zweiter QSK (B) sowie ein dritter QSK (C) generiert werden, mittels derer die Übertragung der QSKs D[1,n] an die nicht-QKD-gestützten Knoten erfolgt, indem
a.) an jeden QSKs benötigenden, nicht-QKD-gestützten Knoten das Ergebnis der XOR-Verknüpfung des ersten QSK (A) mit dem zweiten QSK (B) über einen ersten Netzwerkpfad seiner disjunkten Anbindung an den QKD-Verbund übertragen wird und
b.) an jeden QSKs benötigenden, nicht-QKD-gestützten Knoten das Ergebnis der XOR-Verknüpfung des ersten QSK (A) mit dem dritten QSK (C) über einen nicht im Schritt a) genutzten Netzwerkpfad seiner disjunkten Verbindung mit dem QKD-Verbund übertragen wird und |
c.) an jeden QSKs benötigenden, nicht-QKD-gestützten Knoten das Ergebnis der XOR-Verknüpfung des zweiten QSK (B) mit dem dritten QSK (C) und mit jeweils einem der weiteren QSKs D[1,n] über nur einen der Netzwerkpfade seiner disjunkten Verbindung mit dem QKD-Verbund übertragen wird und
d.) bei jedem QSKs benötigenden, nicht-QKD-gestützten Knoten alle gemäß der Schritte a) bis c) bei ihm ankommenden Ergebnisse miteinander XOR verknüpft werden, wobei das hierdurch erhaltene Ergebnis dem jeweils einem, gemäß Schritt c) verknüpften und mit dem Verknüpfungsergebnis übertragenen QSK D[1,n] entspricht.

3. Verfahren nach Anspruch 2, **dadurch gekennzeichnet, dass** zur Sicherung von Verbindungen und zur gesicherten Übertragung von Daten über diese Verbindungen eine Mehrzahl zusätzlicher, von dem QKD-Verbund generierter QSKs E[1,n] verwendet wird, wobei diese zusätzlichen QSKs E[1,n] an die nicht-QKD-gestützten Knoten verteilt werden, indem Schritt d) folgend
e.) an jeden QSKs benötigenden, nicht-QKD-gestützten Knoten das Ergebnis einer XOR-Verknüpfungen jeweils eines der zusätzlichen Schlüssel E[1,n] mit dem jeweils auch für die XOR-Verknüpfung gemäß Schritt c) verwendeten QSK der QSKs D[1,n] über einen nicht im Schritt c) genutzten Netzwerkpfad seiner disjunkten Verbindung mit dem QKD-Verbund übertragen wird und
f.) bei jedem QSKs benötigenden, nicht-QKD-gestützten Knoten das im Schritt e) ankommende Ergebnis XOR verknüpft wird mit dem jeweils im Schritt d) ermittelten QSK D[1,n], wobei das hierdurch erhaltene Ergebnis dem jeweils einem, gemäß Schritt e) verknüpften und mit dem Verknüpfungsergebnis übertragenen QSK E[1,n] entspricht.

4. Verfahren nach Anspruch 2 oder 3, **dadurch gekennzeichnet, dass** der erste QSK (A), der zweite QSK (B) und der dritte QSK (C) jeweils gleichzeitig in den Netzwerkknoten des QKD-Verbunds vorliegen, wohingegen die weiteren QSKs D[1,n] und die gegebenenfalls zur Erhöhung der Sicherheit generierten zusätzlichen QSKs E[1,n] jeweils durch einen QRNG, nämlich durch einen Quantum Random Number Generator, in einem der Netzwerkknoten des QKD-Verbunds generiert und zwischen den Netzwerkknoten des QKD-Verbunds über die zwischen ihnen bestehende Verbindung ausgetauscht werden.

5. Verfahren nach einem der Ansprüche 1 bis 4, **dadurch gekennzeichnet, dass** die Inbetriebnahme eines nach dem Verfahren arbeitenden Netzwerks in drei nacheinander durchlaufenen Phasen erfolgt, nämlich durch
(i.) Ausführung einer ersten Initialisierungsphase, in welcher durch die Netzwerkknoten des QKD-Verbunds M-QSKs zur Verschlüsselung von Managementdaten, das heißt von Daten mit Informationen für das Netzmanagement, generiert sowie zum Aufbau quantengesicherter M-Kanäle zwischen den Netzwercknoten, nämlich von Übertragungskanälen für Managementdaten, an alle Netzwerkknoten verteilt und diese M-QSKs von allen Netzwerknoten für den Austausch von Managementdaten über die quantengesicherten M-Kanäle verwendet werden,
(ii.) Ausführung einer zweiten Initialisierungsphase, in welcher durch die Netzwerkknoten des QKD-Verbunds D-QSKs zur Verschlüsselung von Nutzdaten generiert sowie zum Aufbau quantengesicherter D-Kanäle zwischen den Netzwerkknoten, nämlich von Übertragungskanälen für Nutzdaten, an alle Netzwercknoten verteilt und diese D-QSKs von allen Netzwerknoten für den Austausch von Nutzdaten über die quantengesicherten D-Kanäle verwendet werden,
(iii.) Ausführung der Arbeitsphase, in welcher weitere M-QSKs und D-QSKs durch den QKD-Verbund generiert und an alle Netzwerkknoten des Netzwerks verteilt sowie von allen Netzwerkknoten zur Verschlüsselung über das Netzwerk übertragener Managementdaten und Nutzdaten verwendet werden,
wobei die Verteilung der QSKs an die Netzwerkknoten des Netzwerks sowohl in den beiden Initialisierungsphasen als auch in der sich anschließenden Arbeitsphase jeweils gemäß den Schritten a) bis d) des Anspruchs 2 oder gemäß den Schritten a) bis f) der Ansprüche 2 und 3 erfolgt.

6. Verfahren nach Anspruch 5, **dadurch gekennzeichnet, dass** alle QSKs | jeweils nach einer QSK-Zeit, nämlich nach einer für sie festgelegten Gültigkeitsdauer ausgetauscht werden.

7. Verfahren nach Anspruch 6, **dadurch gekennzeichnet, dass** die M-QSK-Zeit, nämlich die Gültigkeitsdauer für M-QSKs, kürzer ist als die D-QSK-Zeit, nämlich die Gültigkeitsdauer für D-QSKs.

8. Verfahren nach einem der Ansprüche 1 bis 7, **dadurch gekennzeichnet, dass** der Aufbau der vollständig disjunkten Verbindungen zwischen einem nicht-QKD-gestützten Knoten und einem QKD-Verbund unter Nutzung unterschiedlicher Netzwerktopologien erfolgt und/oder medienübergreifend, nämlich indem disjunkte Netzwerkpfade unter Nutzung unterschiedlicher physischer Übertragungsmedien bereitgestellt werden.

9. Netzwerk für die die Datenübertragung unter Nutzung quantensicherer kryptographischer Schlüssel gemäß dem Verfahren nach Anspruch 1, mit N Netzwerkknoten, nämlich mit mindestens drei, ein vollvermaschtes Netz ausbildenden Netzwerkknoten und mit mindestens zwei über eine QKD-Verbindung miteinander verbundenen, einen QKD-Verbund ausbildenden Netzwerkknoten, wobei aber jedenfalls alle Verbindungen zwischen den N Netzwerknoten und die zwischen den Netzwerknoten über diese Verbindung übertragenen Daten durch QSKs gesichert sind und wobei das Netzwerk zur Steuerung des Generierens und Verteilens von Schlüsseln, als Bestandteil eines Netzmanagements über ein zentrales Key Management und an jedem Netzwerkknoten über ein mit dem zentralen Key Management in einer Wirkverbindung stehendes lokales Key Management verfügt, **dadurch gekennzeichnet, dass** in dem Netzwerk weniger als (N-1) QKD-Verbindungen zwischen den N Netzwerkknoten bestehen, wobei zu allen nicht über eine QKD-Verbindung an das Netzwerk angebundenen Netzwerkknoten, ausgehend von einem durch zwei Netzwerkknoten aufgrund einer zwischen ihnen bestehenden QKD-Verbindung gebildeten QKD-Verbund, eine vollständig disjunkte Verbindung über mindestens zwei voneinander vollständig unabhängige Netzwerkpfade besteht.

10. Netzwerk nach Anspruch 9, **dadurch gekennzeichnet, dass** in dem Netzwerk nur eine QKD-Verbindung zwischen zwei der N Netzwerkknoten besteht.

## Claims

1. Method for distributing and using quantum secure cryptographic keys, that is to say QSKs, in a communication network, namely in a network having at least three network nodes, wherein at least two network nodes, forming a QKD association, in the network are connected to one another by way of a QKD connection, namely by way of a quantum key distribution connection for producing and using shared QSKs, which takes place using quantum mechanical effects, for the purpose of securing connections and for the purpose of encrypted data transmission, and wherein at least one network node of the network is a non-QKD-supported node, that is to say a network node that does not belong to a QKD association, **characterized in that** a completely disjunct connection of this kind is created for all non-QKD-supported nodes that are not already connected to a QKD association by way of two disjunct network paths, and **in that** a QKD association generates a number of first QSKs by means of which, through repeated XORing of single instances of these QSKs with one another and with a respective one of a plurality of further QSKs D[1,n] generated by this QKD association, single instances of the QSKs D[1,n] are successively distributed to non-QKD-supported nodes for the purpose of setting up quantum secure connections to other network nodes and for the purpose of encrypted data transmission via different network paths of their disjunct connection to the QKD association, wherein the generation and distribution of the QSKs takes place under the control of a central key management in cooperation with a local key management that is present at each network node.

2. Method according to Claim 1, **characterized in that** the QKD association generates a first QSK (A), a second QSK (B) and a third QSK (C), by means of which the QSKs D[1,n] are transmitted to the non-QKD-supported nodes by
a.) transmitting to each non-QKD-supported node that requires QSKs the result of the XORing of the first QSK (A) with the second QSK (B) via a first network path of its disjunct connection to the QKD association, and
b.) transmitting to each non-QKD-supported node that requires QSKs the result of the XORing of the first QSK (A) with the third QSK (C) via a network path, not used in step a), of its disjunct connection to the QKD association, and
c.) transmitting to each non-QKD-supported node that requires QSKs the result of the XORing of the second QSK (B) with the third QSK (C) and with a respective one of the further QSKs D[1,n] via only one of the network paths of its disjunct connection to the QKD association, and
d.) XORing for each non-QKD-supported node that requires QSKs all of the results arriving at it according to steps a) to c) with one another, wherein the result obtained by way of this corresponds to the respective one QSK D[1,n] logically combined according to step c) and transmitted with the logic result.

3. Method according to Claim 2, **characterized in that** for the purpose of securing connections and for the purpose of secure transmission of data via these connections, a plurality of additional QSKs E[1,n] generated by the QKD association are used, these additional QSKs E[1,n] being distributed to the non-QKD-supported nodes by, following on from step d),
e.) transmitting to each non-QKD-supported node that requires QSKs the result of an XORing of a respective one of the additional keys E[1,n] with the respective QSK of the QSKs D[1,n] that is also used for the XORing according to step c) via a network path, not used in step c), of its disjunct connection to the QKD association, and
f.) XORing for each non-QKD-supported node that requires QSKs the result arriving in step e) with the respective QSK D[1,n] ascertained in step d), wherein the result obtained by way of this corresponds to the respective one QSK E[1,n] logically combined according to step e) and transmitted with the logic result.

4. Method according to Claim 2 or 3, **characterized in that** the first QSK (A), the second QSK (B) and the third QSK (C) are each present in the network nodes of the QKD association at the same time, whereas the further QSKs D[1,n] and the additional QSKs E[1,n] possibly generated for the purpose of increasing security are each generated by a QRNG, namely by a quantum random number generator, in one of the network nodes of the QKD association and interchanged between the network nodes of the QKD association via the connection that exists between them.

5. Method according to one of Claims 1 to 4, **characterized in that** startup of a network operating using the method takes place in three successively performed phases, namely by
(i.) carrying out a first initialization phase, in which the network nodes of the QKD association generate M-QSKs for the purpose of encrypting management data, that is to say data containing information for the network management, and, for the purpose of setting up quantum secure M channels between the network nodes, namely transmission channels for management data, distribute said M-QSKs to all network nodes, and these M-QSKs are used by all of the network nodes for interchanging management data via the quantum secure M channels,
(ii.) carrying out a second initialization phase, in which the network nodes of the QKD association generate D-QSKs for the purpose of encrypting payload data and, for the purpose of setting up quantum secure D channels between the network nodes, namely transmission channels for payload data, distribute said D-QSKs to all network nodes, and these D-QSKs are used by all of the network nodes for interchanging payload data via the quantum secure D channels,
(iii.) carrying out the operating phase, in which further M-QSKs and D-QSKs are generated by the QKD association and distributed to all network nodes of the network and used by all of the network nodes for encrypting management data and payload data transmitted via the network,
wherein the QSKs are distributed to the network nodes of the network both in the two initialization phases and in the subsequent operating phase in each case according to steps a) to d) of Claim 2 or according to steps a) to f) of Claims 2 and 3.

6. Method according to Claim 5, **characterized in that** all QSKs are interchanged after a QSK time, namely after a validity period stipulated for them, in each case.

7. Method according to Claim 6, **characterized in that** the M-QSK time, namely the validity period for M-QSKs, is shorter than the D-QSK time, namely the validity period for D-QSKs.

8. Method according to one of Claims 1 to 7, **characterized in that** the completely disjunct connections between a non-QKD-supported node and a QKD node are set up using different network topologies and/or across media, namely by providing disjunct network paths using different physical transmission media.

9. Network for data transmission using quantum secure cryptographic keys using the method according to Claim 1, having N network nodes, namely having at least three network nodes that form a fully meshed network and having at least two network nodes, connected to one another by way of a QKD connection, that form a QKD association, but wherein at any rate all connections between the N network nodes and the data transmitted between the network nodes via this connection are secured by QSKs and wherein the network has, for the purpose of controlling the generation and distribution of keys, as part of a network management, a central key management and, at each network node, a local key management operatively connected to the central key management, **characterized in that** fewer than (N-1) QKD connections exist between the N network nodes in the network, wherein a fully disjunct connection by way of at least two network paths that are totally independent of one another exists for all network nodes that are not connected to the network by way of a QKD connection, based on a QKD association formed by two network nodes on the basis of a QKD connection that exists between them.

10. Network according to Claim 9, **characterized in that** only one QKD connection exists between two of the N network nodes in the network.

## Revendications

1. Procédé pour distribuer et utiliser des clés cryptographiques à sécurité quantique, c'est-à-dire des QSK, dans un réseau de communication, à savoir dans un réseau comprenant au moins trois nœuds de réseau, au moins deux nœuds de réseau formant une association de QKD étant reliés entre eux dans le réseau par le biais d'une liaison de QKD, à savoir par le biais d'une liaison de distribution quantique de clé pour une génération et une utilisation, effectuées en utilisant des effets mécaniques quantiques, de QSK communes pour la sécurisation de liaison et pour la transmission de données chiffrées, et au moins un nœud de réseau du réseau étant un nœud non pris en charge par la QKD, c'est-à-dire ne faisant pas partie d'une association de QKD, **caractérisé en ce que** pour tous les nœuds non pris en charge par la QKD qui ne sont pas encore reliés à une association de QKD par le biais de deux chemins de réseau disjonctifs, une telle liaison disjonctive entière est réalisée et **en ce qu'**un certain nombre de premières QSK est généré par une association de QKD, au moyen desquelles, par une combinaison XOR répétée de QSK individuelles de ces QSK entre elles ainsi qu'avec respectivement l'une d'une pluralité de QSK D[1,n] supplémentaires générées par cette association de QKD, des QSK D[1,n] individuelles parmi les QSK D[1,n] sont distribuées à des nœuds non pris en charge par la QKD en vue d'établir des liaisons à sécurité quantique avec d'autres nœuds de réseau et pour la transmission de données chiffrées par le biais des différents trajets de réseau de leur liaison disjonctive avec l'association de QKD, la génération et la distribution des QSK s'effectuant de manière commandée par un gestionnaire de clé central en collaboration avec un gestionnaire de clé local présent au niveau de chaque nœud de réseau.

2. Procédé selon la revendication 1, **caractérisé en ce qu'**une première QSK (A), une deuxième QSK (B) ainsi qu'une troisième QSK (C) sont générées par l'association de QKD, au moyen desquelles est effectuée la transmission des QSK D[1,n] aux nœuds non pris en charge par la QKD, par le fait que
a.) le résultat de la combinaison XOR de la première QSK (A) avec la deuxième QSK (B) est transmis à chaque nœud non pris en charge par la QKD nécessitant des QSK par le biais d'un premier trajet de réseau de sa connexion disjonctive à l'association de QKD et
b.) le résultat de la combinaison XOR de la première QSK (A) avec la troisième QSK (C) est transmis à chaque nœud non pris en charge par la QKD nécessitant des QSK par le biais d'un trajet de réseau non utilisé à l'étape a) de sa liaison disjonctive avec l'association de QKD et
c.) le résultat de la combinaison XOR de la deuxième QSK (B) avec la troisième QSK (C) et avec respectivement l'une des QSK D[1,n] supplémentaires est transmis à chaque nœud non pris en charge par la QKD nécessitant des QSK respectivement par le biais d'un seul des trajets de réseau de sa liaison disjonctive avec l'association de QKD et
d.) à chaque nœud non pris en charge par la QKD nécessitant des QSK, tous les résultats arrivant à lui selon les étapes a) à c) sont combinés XOR entre eux, le résultat ainsi obtenu correspondant à ladite QSK D[1,n] respective combinée selon l'étape c) et transmise avec le résultat de la combinaison.

3. Procédé selon la revendication 2, **caractérisé en ce qu'**en vue de la sécurisation des liaisons et qu'en vue de la transmission sécurisée de données par le biais de ces liaisons, une pluralité de QSK E[1,n] supplémentaires générées par l'association de QKD sont utilisées, ces QSK E[1,n]supplémentaires étant distribuées aux nœuds non pris en charge par la QKD en faisant suivre l'étape d) par
e.) le résultat des combinaisons XOR respectivement de l'une des clés E[1,n] supplémentaires avec la QSK des QSK D[1,n] respectivement aussi utilisée pour la combinaison XOR selon l'étape c) est transmis à chaque nœud non pris en charge par la QKD nécessitant des QSK par le biais d'un trajet de réseau non utilisé à l'étape c) de sa liaison disjonctive avec l'association de QKD et
f.) à chaque nœud non pris en charge par la QKD nécessitant des QSK, le résultat arrivant à l'étape e) est combiné XOR avec la QSK D[1,n] respectivement déterminée à l'étape d), le résultat ainsi obtenu correspondant à ladite QSK E[1,n]respective combinée selon l'étape e) et transmise avec le résultat de la combinaison.

4. Procédé selon la revendication 2 ou 3, **caractérisé en ce que** la première QSK (A), la deuxième QSK (B) et la troisième QSK (C) sont respectivement présentes simultanément dans les nœuds de réseau de l'association de QKD, alors que les QSK D[1,n] supplémentaires et les QSK E[1,n] supplémentaires éventuellement générées pour augmenter la sécurité ne sont respectivement générées que par un QRNG, à savoir par un générateur de nombre aléatoire quantique, dans l'un des nœuds de réseau de l'association de QKD et sont échangées entre les nœuds de réseau de l'association de QKD par le biais de la liaison existante entre eux.

5. Procédé selon l'une des revendications 1 à 4, **caractérisé en ce que** la mise en service d'un réseau fonctionnant selon le procédé s'effectue en trois phases traversées l'une après l'autre, à savoir par
(i.) exécution d'une première phase d'initialisation, dans laquelle des M-QSK destinées au chiffrement de données de gestion, c'est-à-dire de données contenant des informations pour la gestion du réseau, sont générées par les nœuds de réseau de l'association de QKD et sont distribuées à tous les nœuds de réseau en vue de l'établissement de canaux M à sécurité quantique entre les nœuds de réseau, à savoir de canaux de transmission pour les données de gestion, et ces M-QSK sont utilisées par tous les nœuds de réseau pour l'échange de données de gestion par le biais des canaux M à sécurité quantique,
(ii.) exécution d'une deuxième phase d'initialisation, dans laquelle des D-QSK destinées au chiffrement de données utiles sont générées par les nœuds de réseau de l'association de QKD et sont distribuées à tous les nœuds de réseau en vue de l'établissement de canaux D à sécurité quantique entre les nœuds de réseau, à savoir de canaux de transmission pour les données utiles, et ces D-QSK sont utilisées par tous les nœuds de réseau pour l'échange de données utiles par le biais des canaux D à sécurité quantique,
(iii.) exécution d'une phase de travail, dans laquelle des M-QSK et des D-QSK supplémentaires sont générées par l'association de QKD et distribuées à tous les nœuds de réseau et utilisées par tous les nœuds de réseau pour le chiffrement des données de gestion et des données utiles transmises par le biais du réseau,
la distribution des QSK aux nœuds de réseau du réseau à la fois dans les deux phases d'initialisation ainsi que dans la phase de travail qui suit s'effectuant respectivement conformément aux étapes a) à d) de la revendication 2 ou conformément aux étapes a) à f) des revendications 2 et 3.

6. Procédé selon la revendication 5, **caractérisé en ce que** toutes les QSK sont remplacées respectivement après un temps de QSK, à savoir après une durée de validité fixée pour elles.

7. Procédé selon la revendication 6, **caractérisé en ce que** le temps de M-QSK, à savoir la durée de validité pour les M-QSK, est plus court que le temps de D-QSK, à savoir la durée de validité pour les D-QSK.

8. Procédé selon l'une des revendications 1 à 7, **caractérisé en ce que** l'établissement des liaisons entièrement disjonctives entre un nœud non pris en charge par la QKD et une association de QKD s'effectue en utilisant des topologies de réseau différentes et/ou en couvrant l'ensemble des supports, à savoir **en ce que** les trajets de réseau disjonctifs sont fournis en utilisant des supports de transmission physique différents.

9. Réseau pour la transmission de données en utilisant des clés cryptographiques à sécurité quantique conformément au procédé selon la revendication 1, comprenant N nœuds de réseau, à savoir comprenant au moins trois nœuds de réseau formant un réseau entièrement maillé, et comprenant au moins deux nœuds de réseau reliés entre eux par le biais d'une liaison de QKD, formant une association de QKD, toutes les liaisons entre les N nœuds de réseau ainsi que les données transmises par le biais de ces liaisons entre les nœuds de réseau étant dans tous les cas sécurisées par des QSK et le réseau, pour la commande de la génération et de la distribution de clés, disposant d'un gestionnaire de clé central en tant qu'élément constitutif d'une gestion de réseau et, au niveau de chaque nœud de réseau, d'un gestionnaire de clé local en liaison fonctionnelle avec le gestionnaire de clé central, **caractérisé en ce que** moins de (N-1) liaisons de QKD entre les N nœuds de réseau existent dans le réseau, une liaison disjonctive entière par le biais d'au moins deux trajets de réseaux entièrement indépendants l'un de l'autre existant vers tous les nœuds de réseau non connectés au réseau par le biais d'une liaison de QKD, à partir d'une association de QKD formée par deux nœuds de réseau en raison d'une liaison de QKD existante entre eux.

10. Réseau selon la revendication 9, **caractérisé en ce qu'**une seule liaison de QKD entre deux des N nœuds de réseau existe dans le réseau.
